# EUROPÄISCHE PATENTSCHRIFT

(11) **EP 2 832 493 B1**
(45) Veröffentlichungstag und Bekanntmachung des Hinweises auf die Patenterteilung: **27.04.2016**
(21) Anmeldenummer: 14178469.4
(22) Anmeldetag: 25.07.2014
(51) Int. Cl.: B23Q 11/10

(54) **Bearbeitungsvorrichtung und Verfahren zum Bearbeiten von Werkstücken**
Machining device and method for machining workpieces
Dispositif de traitement et procédé de traitement de pièces à usiner

(30) Priorität: 31.07.2013 DE 102013215057
(43) Veröffentlichungstag der Anmeldung: 04.02.2015
(73) Patentinhaber: MAG IAS GmbH, 73033 Göppingen (DE)
(72) Erfinder: Wunderlich, Armin, 73061 Ebersbach-Weiler (DE); Kolb, Holger, 71636 Ludwigsburg (DE); Lang, Heiner, 73728 Esslingen (DE)
(74) Vertreter: Rau, Schneck & Hübner Patentanwälte Rechtsanwälte PartGmbB

(56) Entgegenhaltungen:
- EP-A1- 1 375 063
- EP-A2- 0 340 026
- EP-A2- 2 345 495
- WO-A1-03/106104
- DE-A1-102011 007 706
- DE-B3-102011 003 714
- DE-U1- 20 205 861

## Beschreibung

Die Erfindung betrifft eine Bearbeitungsvorrichtung sowie ein zugehöriges Verfahren zum Bearbeiten von Werkstücken.

Aus der WO 2010/124 045 A1 ist eine Werkzeugspindel bekannt, die zur Zuführung eines kryogenen Kühlfluids zu einem Bearbeitungswerkzeug einen axial angeordneten Zuführkanal aufweist. Der Zuführkanal wird durch eine vakuumisolierte Rohrleitung gebildet, die feststehend und konzentrisch zu der Drehachse der Werkzeugspindel angeordnet ist. Das durch die Rohrleitung zugeführte kryogene Kühlfluid gelangt durch einen axial in dem Werkzeughalter und dem Werkzeug ausgebildeten Zuführkanal zu den Werkzeugschneiden. Durch die Zuführung des kryogenen Kühlfluids während der Werkstückbearbeitung wird bei schwer zu bearbeitenden Werkstoffen eine vergleichsweise höhere Bearbeitungsgeschwindigkeit erzielt. Nachteilig ist, dass die Zuführung eines kryogenen Kühlfluids bei der Werkstückbearbeitung nicht bei beliebigen Werkstoffen vorteilhaft ist, sondern bei einzelnen Werkstoffen keine bzw. im Verhältnis zu dem Mehraufwand nur geringfügige Vorteile erzielt werden.

Aus der EP 2 345 495 A2 ist eine Arbeitsspindel mit zwei Druckkammern bekannt. Durch Beaufschlagung der beiden Druckkammern mit einem Druckfluid kann die Spannkraft der Arbeitsspindel vergrößert werden. Durch eine zentrale Bohrung in der Spannstange wird ein Kühlschmiermittel zu einem gespannten Werkzeug geleitet.

Aus der EP 1 375 063 A1 ist eine Spindelvorrichtung mit einer Minimalmengenschmierung bekannt. Ein Nebelerzeugungsteil erzeugt aus einer Kühlflüssigkeit, die durch eine Flüssigkeitspassage zugeführt, und aus Druckluft, die durch eine Druckluftpassage zugeführt wird, Nebel.

Aus der DE 10 2011 003 714 B3 ist eine Bearbeitungsvorrichtung zum Bearbeiten von Kurbelwellen bekannt, die eine vakuumisolierte erste Zuführleitung und mehrere quer dazu verlaufende vakuumisolierte zweite Zuführleitungen zu Schneideinsätzen offenbart. Durch die Zuführleitungen wird ein kryogenes Kühlmedium zu den Schneideinsätzen geführt.

Aus der WO 03/106104 A1 ist eine Werkzeugspindel bekannt, die einen Zuführkanal für Schmieröl und einen Zuführkanal für Druckluft ausbildet. Das Schmieröl und die Druckluft werden unter Bildung eines Sprühnebels zusammengeführt, wobei der Sprühnebel durch einen Zuführkanal im Werkzeug zu den Schneiden geführt wird.

Aus der DE 10 2011 007 706 A1 ist ein Werkzeugkopf mit Zerstäubersystem für Kühlschmierstoff-Aerosol bekannt.

Aus der EP 0 340 026 A2 ist eine Werkzeugspindel mit einem zentralen Schmiermitteldurchgang bekannt, der sich in mehrere Schmiermittelkanäle verzweigt.

Aus der DE 202 05 861 U1 ist eine Bohreinrichtung mit einer Bohrspindel bekannt, der über zwei getrennte Zuleitungen ein Kühl-Schmierstoff aus einem Vorratsbehälter zugeführt wird.

Der Erfindung liegt somit die Aufgabe zugrunde, eine Werkzeugspindel zu schaffen, die in einfacher und flexibler Weise eine optimale Bearbeitung von Werkstücken für verschiedenste Zerspanungsprozesse und/oder Werkstoffe ermöglicht.

Diese Aufgabe wird durch eine Bearbeitungsvorrichtung mit den Merkmalen des Anspruchs 1 gelöst. Die Bearbeitungsvorrichtung ermöglicht in einfacher und flexibler Weise eine optimale Werkstückbearbeitung, insbesondere hinsichtlich verschiedenster Zerspanungsprozesse und/oder Werkstoffe. In Abhängigkeit der Werkstückbearbeitung kann die Bearbeitungsvorrichtung in optimaler Weise in einer Betriebsart oder mehreren Betriebsarten betrieben werden. In einer ersten Betriebsart wird ausschließlich ein Kühlfluid zu der Werkzeugspindel geführt. Das Kühlfluid ist insbesondere ein kryogenes Kühlfluid, das eine trockene Werkstückbearbeitung ermöglicht. Beispielsweise wird flüssiger oder gasförmiger Stickstoff zugeführt, der sich nach der Werkstückbearbeitung verflüchtigt. Weiterhin kann beispielsweise ausschließlich Luft mit einer Temperatur T_{K} von höchstens 0°C, insbesondere von höchstens -10°C und insbesondere von höchstens-50°C zugeführt werden. In einer zweiten Betriebsart wird ausschließlich ein Fluid, insbesondere ein Schmiermittel-Fluid-Gemisch, zugeführt. Die Bearbeitungsvorrichtung kann somit als bekannte Minimalmengenschmierung betrieben werden. In einer dritten Betriebsart wird zeitgleich ein Kühlfluid und ein Fluid, insbesondere ein Schmiermittel-Fluid-Gemisch, zugeführt. Weiterhin kann beispielsweise gekühlte Luft mit einer Temperatur von -140 °C bis 20 °C zugeführt werden. Hierzu kann beispielsweise ein Kühlfluid bzw. kryogenes Kühlfluid und ein Fluid - ohne ein Schmiermittel - durch die Zuführkanäle zugeführt werden. Die Bearbeitungsvorrichtung ist somit in einfacher und flexibler Weise als Kühlung und/oder Schmierung betreibbar. Die Bearbeitungsvorrichtung ermöglicht in Abhängigkeit der Werkstückbearbeitung eine optimale Kühlung und Schmierung, die unabhängig voneinander einstellbar sind. Durch die Bereitstellungseinheiten werden der Werkzeugspindel das Kühlfluid und das Fluid, insbesondere das Schmiermittel-Fluid-Gemisch, bereitgestellt. Die Zuführung des Kühlfluids und/oder des Fluids und/oder des Schmiermittel-Fluid-Gemischs wird mittels der Steuereinheit gesteuert. Vorzugsweise umfasst die Bearbeitungsvorrichtung eine Werkzeugmaschine zur spanenden Bearbeitung von Werkstücken. Die Werkzeugmaschine dient vorzugsweise zur spanenden Bearbeitung von metallischen und/oder keramischen Werkstücken bzw. Werkstoffen.

Die Werkzeugspindel weist einen ersten Zuführkanal zum Zuführen eines Kühlfluids und einen zweiten Zuführkanal zum Zuführen eines Fluids, insbesondere eines Schmiermittel-Fluid-Gemischs zu dem eingespannten Bearbeitungswerkzeug auf. Die Zuführkanäle sind innerhalb der Werkzeugspindel zumindest abschnittsweise separat ausgebildet. Vorzugsweise sind die Zuführkanäle innerhalb der Werkzeugspindel vollständig separat ausgebildet. Durch die Zuführkanäle kann in einfacher und flexibler Weise je nach zu bearbeitendem Werkstoff dem Bearbeitungswerkzeug ein Kühlfluid und/oder ein Fluid und/oder ein Schmiermittel-Fluid-Gemisch zugeführt werden. Die Werkzeugspindel ermöglicht somit verschiedene Betriebsarten. Das Fluid ist insbesondere als Gas ausgebildet, sodass ein Schmiermittel-Gas-Gemisch zugeführt wird.

Bei der ersten Betriebsart wird ein Kühlfluid, insbesondere ein kryogenes Kühlfluid, durch den ersten Zuführkanal zu dem Bearbeitungswerkzeug geführt, wobei zeitgleich kein Fluid, insbesondere kein Schmiermittel-Fluid-Gemisch, zugeführt wird. Die Werkzeugspindel kann somit mit einer kryogenen Kühlung betrieben werden.

Bei der zweiten Betriebsart wird demgegenüber ein Schmiermittel-Fluid-Gemisch durch den zweiten Zuführkanal zu dem Bearbeitungswerkzeug geführt, ohne dass zeitgleich ein Kühlfluid zugeführt wird. Die Werkzeugspindel kann somit mit einer üblichen Minimalmengenschmierung (MMS: Minimalmengenschmierung bzw. MQL: Minimum Quantity Labrication) betrieben werden. Der Anteil des Schmiermittels kann insbesondere bis auf Null reduziert werden, sodass ausschließlich ein Fluid, insbesondere ein Gas, wie beispielsweise Luft durch den zweiten Zuführkanal geführt wird.

Bei der dritten Betriebsart werden zeitgleich ein Kühlfluid durch den ersten Zuführkanal und ein Fluid, insbesondere ein Schmiermittel-Fluid-Gemisch, durch den zweiten Zuführkanal zu dem Bearbeitungswerkzeug geführt. Hierdurch kann eine hocheffiziente Kühlung und/oder Schmierung erzielt werden, bei der in Abhängigkeit der Temperatur des Kühlfluids und/oder des Durchflusses des Kühlfluids in flexibler Weise die Kühl- und/oder Schmiereigenschaften bei der Werkstückbearbeitung veränderbar sind. Das Mischen des Kühlfluids mit dem Fluid, insbesondere dem Schmiermittel-Fluid-Gemisch, erfolgt entweder in der Werkzeugspindel selbst oder in einem in der Werkzeugspindel gespannten Bearbeitungswerkzeug. Vorzugsweise ist der Anteil des Schmiermittels bis auf Null reduzierbar, sodass ein Schmiermittel-Fluid-Gemisch oder lediglich ein Fluid, wie beispielsweise Luft, zuführbar ist. Durch das Mischen des Kühlfluids, beispielsweise des Stickstoffs, mit dem Fluid, beispielsweise Luft, ist eine definierte Kühlung mit einem kalten Fluid, insbesondere mit kalter Luft möglich. Falls bei einer Werkstückbearbeitung keinerlei Schmiermittel zulässig ist, beispielsweise bei einer Werkstückbearbeitung für die Luftfahrt, Elektroindustrie oder Medizintechnik oder wenn das Schmiermittel mit den Schneiden bzw. dem Schneidstoff, beispielsweise mit kubischem Bornitrit (CBN) reagiert, ist mit einer definierten Kühlung mittels kaltem Fluid bzw. kalter Luft eine verbesserte Werkstückbearbeitung möglich.

Erfolgt das Mischen in der Werkzeugspindel selbst, so münden die Zuführkanäle in der Werkzeugspindel ineinander bzw. in einen Mischraum. Das Bearbeitungswerkzeug benötigt in diesem Fall lediglich einen Werkzeug-Zuführkanal, in dem die Mischung aus dem Kühlfluid und dem Fluid, insbesondere dem Schmiermittel-Fluid-Gemisch, zu den Verteilerkanälen im Bearbeitungswerkzeug geführt wird.

Erfolgt das Mischen des Kühlfluids mit dem Fluid, insbesondere dem Schmiermittel-Fluid-Gemisch, in dem Bearbeitungswerkzeug, so sind die Zuführkanäle bis zu dem eingespannten Bearbeitungswerkzeug separat ausgebildet, sodass sich das Kühlfluid innerhalb der Werkzeugspindel nicht mit dem Schmiermittel-Fluid-Gemisch vermischt. Erfolgt das Mischen in dem Bearbeitungswerkzeug unmittelbar nach der Werkzeugspindel, so münden die Zuführkanäle direkt in einen Mischraum des Bearbeitungswerkzeugs, der den Werkzeug-Zuführkanal bildet, der zu den Verteilerkanälen führt.

Erfolgt das Mischen nicht unmittelbar nach der Werkzeugspindel, sondern beispielsweise mittig oder endseitig in dem Bearbeitungswerkzeug, so weist das Bearbeitungswerkzeug einen ersten Werkzeug-Zuführkanal für das Kühlfluid und einen zweiten Werkzeug-Zuführkanal für das Fluid, insbesondere das Schmiermittel-Fluid-Gemisch auf, die in einen Mischraum münden, von dem aus die Mischung zu den Verteilerkanälen gelangt. Das Bearbeitungswerkzeug umfasst insbesondere einen Spannabschnitt zum Wechselwirken mit der Spanneinheit, einen ersten Werkzeug-Zuführkanal zum Aufnehmen des Kühlfluids aus dem ersten Zuführkanal, einen zweiten Werkzeug-Zuführkanal zum Aufnehmen des Fluids, insbesondere des Schmiermittel-Fluid-Gemischs, aus dem zweiten Zuführkanal, mindestens eine Schneide, und mindestens eine mit den Werkzeug-Zuführkanälen in Verbindung stehende Werkzeug-Austrittsöffnung zum Austreten des Kühlfluids und/oder des Fluids, insbesondere des Schmiermittel-Fluid-Gemischs, im Bereich der mindestens einen Schneide. Dadurch, dass das Bearbeitungswerkzeug einen ersten Werkzeug-Zuführkanal und einen separaten zweiten Werkzeug-Zuführkanal aufweist, können das Kühlfluid und das Fluid, insbesondere das Schmiermittel-Fluid-Gemisch, dem Bearbeitungswerkzeug separat zugeführt werden. Ist das Bearbeitungswerkzeug in die Werkzeugspindel eingespannt, so ist der erste Zuführkanal in Verbindung mit dem ersten Werkzeug-Zuführkanal und der zweite Zuführkanal in Verbindung mit dem zweiten Werkzeug-Zuführkanal.

Je nach Ausbildung können das Kühlfluid und das Fluid, insbesondere das Schmiermittel-Fluid-Gemisch, innerhalb des Bearbeitungswerkzeugs gemischt und zu der mindestens einen Schneide geführt werden oder getrennt bis zu der mindestens einen Schneide geführt werden. In einer ersten Betriebsart der Werkzeugspindel wird ausschließlich das Kühlfluid, insbesondere ein kryogenes Kühlfluid, durch den ersten Werkzeug-Zuführkanal zu der mindestens einen Schneide geführt. In einer zweiten Betriebsart der Werkzeugspindel wird ausschließlich das Fluid, insbesondere das Schmiermittel-Fluid-Gemisch, durch den zweiten Werkzeug-Zuführkanal zu der mindestens einen Schneide geführt. In einer dritten Betriebsart der Werkzeugspindel wird sowohl das Kühlfluid als auch das Fluid, insbesondere das Schmiermittel-Fluid-Gemisch, insbesondere eine Mischung aus beidem, zu der mindestens einen Schneide geführt. Vorzugsweise ist durch den zweiten Werkzeug-Zuführkanal ein Fluid und/oder ein Schmiermittel-Fluid-Gemisch zuführbar. Hierzu ist beispielsweise der Anteil des Schmiermittels bis auf Null reduzierbar, sodass ausschließlich das Fluid zugeführt wird. Das erfindungsgemäße Bearbeitungswerkzeug ermöglicht somit in einfacher und zuverlässiger Weise alle drei Betriebsarten der Werkzeugspindel. Das Bearbeitungswerkzeug weist insbesondere mehrere Schneiden auf.

Das Bearbeitungswerkzeug weist insbesondere mindestens einen Temperatur-Messsensor auf. Der mindestens eine Temperatur-Messsensor ist vorzugsweise in einem Werkzeug-Mischraum angeordnet, in den die Werkzeug-Zuführkanäle münden. Mittels des mindestens einen Temperatur-Messsensors ist vorzugsweise eine drahtlose Signalübertragung an die Steuereinheit der erfindungsgemäßen Bearbeitungsvorrichtung möglich.

Die Werkzeug-Zuführkanäle zum Mischen des Kühlfluids mit dem Fluid, insbesondere dem Schmiermittel-Fluid-Gemisch, münden vorzugsweise in einen Werkzeug-Mischraum, wobei mehrere Verteilerkanäle von dem Werkzeug-Mischraum zu mehreren Schneiden führen. Dies ermöglicht in einfacher Weise ein Mischen des Kühlfluids mit dem Fluid, insbesondere dem Schmiermittel-Fluid-Gemisch, vor den Schneiden. Von dem Werkzeug-Mischraum erstrecken sich mehrere Verteilerkanäle zu einer jeweiligen Schneide, sodass die Mischung ausgehend von dem Mischraum zu den Schneiden führbar ist. Der Mischraum kann an einer beliebigen Stelle im Bearbeitungswerkzeug ausgebildet sein. Vorzugsweise ist der Mischraum endseitig im Bearbeitungswerkzeug ausgebildet, also an einem der Werkzeugspindel zugewandten Ende oder an einem dem zu bearbeitenden Werkstück zugewandten Ende. Der Mischraum ist insbesondere koaxial zu einer Werkzeug-Drehachse ausgebildet.

Vorzugsweise ist konzentrisch zu einer Werkzeug-Drehachse eine Axialbohrung ausgebildet und in dieser eine Werkzeug-Rohrleitung angeordnet. Dies ermöglicht auf einfache Weise die Ausbildung der Werkzeug-Zuführkanäle. Die Werkzeug-Rohrleitung bildet mit ihrem Innenraum den ersten Werkzeug-Zuführkanal aus. Die Axialbohrung ist vorzugsweise werkstückseitig verschlossen, also als Sacklochbohrung ausgebildet, sodass die Werkzeug-Rohrleitung endseitig in einen durch die Axialbohrung gebildeten Werkzeug-Mischraum mündet. Die Werkzeug-Rohrleitung weist vorzugsweise einen Außendurchmesser D_{WA} auf, der kleiner als ein Bohrungsmesser D_{WB} der Axialbohrung ist, sodass ein Ringraum zwischen der Werkzeug-Rohrleitung und einem Grundkörper des Bearbeitungswerkzeugs den zweiten Werkzeug-Zuführkanal bildet. Die Werkzeug-Rohrleitung kann entsprechend der Rohrleitung der Werkzeugspindel ausgebildet sein. Weiterhin kann die Werkzeug-Rohrleitung aus PTFE ausgebildet sein. Die Werkzeug-Rohrleitung wird auch als Werkzeug-Lanze bezeichnet.

Der erste Werkzeug-Zuführkanal ist insbesondere durch eine Werkzeug-Rohrleitung ausgebildet, wobei die Werkzeug-Rohrleitung den zweiten Werkzeug-Zuführkanal zumindest teilweise begrenzt. Dies ermöglicht in einfacher Weise die Ausbildung der Werkzeug-Zuführkanäle. Der erste Werkzeug-Zuführkanal wird durch den Innenraum der Werkzeug-Rohrleitung gebildet. Der zweite Werkzeug-Zuführkanal ist vorzugsweise in der Wand der Werkzeug-Rohrleitung in axialer Richtung und/oder als Ringraum zwischen der Werkzeug-Rohrleitung und einem Grundkörper des Bearbeitungswerkzeugs ausgebildet. Vorzugsweise weist der zweite Werkzeug-Zuführkanal zwei Kanalabschnitte auf. In einem ersten Kanalabschnitt sind in der Wand der Werkzeug-Rohrleitung umfangsseitig mehrere Kanäle bzw. Verbindungskanäle ausgebildet, die in einem zweiten Kanalabschnitt in einen gemeinsamen Ringkanal bzw. Ringraum münden, der zwischen der Werkzeug-Rohrleitung und dem Grundkörper des Bearbeitungswerkzeugs ausgebildet ist. In dem ersten Kanalabschnitt können die Kanäle in der Werkzeug-Rohrleitung so ausgebildet sein, dass die Werkzeug-Rohrleitung die Kanäle umfangsseitig vollständig begrenzt und/oder nur teilweise begrenzt und der Kanal sowohl von der Werkzeug-Rohrleitung als auch von dem Grundkörper und/oder einer Hülse begrenzt ist. Durch den ersten Kanalabschnitt wird somit eine Lagerung bzw. Fixierung der Werkzeug-Rohrleitung in dem Grundkörper des Bearbeitungswerkzeugs erzielt.

Durch die Zuführung des Kühlfluids und/oder des Fluids und/oder des Schmiermittel-Fluid-Gemischs kann die Werkstückbearbeitung in einfacher und flexibler Weise für verschiedenste Zerspanungsprozesse und Werkstoffe optimiert werden.

Eine Bearbeitungsvorrichtung nach Anspruch 2 ermöglicht in einfacher Weise die Versorgung der Werkzeugspindel mit dem Kühlfluid. Vorzugsweise ist der Druckspeicher isoliert und/oder kühlbar ausgebildet. Hierdurch wird die Bereitstellung von Kühlfluiden mit einer Temperatur T_{K} unterhalb der Umgebungstemperatur ermöglicht. Der isolierte Druckspeicher weist vorzugsweise eine Außenwand auf, die eine spezifische Wärmeleitfähigkeit bei 0°C von höchstens 0,40 W/(mK), insbesondere von höchstens 0,30 W/(mK), insbesondere von höchstens 0,20 W/(mK) und insbesondere von höchstens 0,10 W/(mK) aufweist. Die Kühlung des Druckspeichers erfolgt vorzugsweise mittels eines Kühlaggregats. Der Druckspeicher ist insbesondere derart ausgebildet, dass ein Kühlfluid mit einer Temperatur T_{K} von höchstens 0°C, insbesondere von höchstens -10°C und insbesondere von höchstens -50°C dauerhaft bereitstellbar ist.

Eine Bearbeitungsvorrichtung nach Anspruch 3 ermöglicht in einfacher Weise eine Einstellung des Durchflusses des Kühlfluids durch die Werkzeugspindel. Mittels des ersten Ventils ist der Durchfluss des Kühlfluids insbesondere stufenweise und/oder kontinuierlich einstellbar. Zudem dient das erste Ventil bei Bedarf als Absperrventil, sodass die Zufuhr des Kühlfluids zu der Werkzeugspindel absperrbar ist. Das erste Ventil ist insbesondere mittels der Steuereinheit ansteuerbar.

Eine Bearbeitungsvorrichtung nach Anspruch 4 ermöglicht in einfacher und flexibler Weise die Bereitstellung eines Fluids und/oder eines Schmiermittel-Fluid-Gemischs. Mittels des Mischgeräts können je nach Bedarf ein für die Werkstückbearbeitung optimiertes Schmiermittel-Fluid-Gemisch bereitgestellt werden. Das Schmiermittel ist beispielsweise fest oder flüssig ausgebildet. Als festes Schmiermittel dient beispielsweise Grafit. Als flüssiges Schmiermittel dienen beispielsweise Schmieröle. Das Fluid wird insbesondere als Gas bereitgestellt, beispielsweise als Luft. Vorzugsweise ist das Mischgerät als Minimalmengen-Mischgerät ausgebildet. Hierdurch ist eine bekannte Minimalmengenschmierung (MMS: Minimalmengenschmierung oder MQL: Minimum Quantity Labrication) möglich. Mittels des Mischgeräts ist vorzugsweise der Anteil des Schmiermittels bis auf Null reduzierbar, sodass wahlweise ein Fluid, wie beispielsweise Luft, oder ein Schmiermittel-Fluid-Gemisch bereitgestellt wird.

Das Minimalmengen-Mischgerät ist insbesondere mit einem Druck p_{G} im Bereich von 1 bis 12 bar über Umgebungsdruck, insbesondere von 2 bis 10 bar über Umgebungsdruck und insbesondere von 3 bis 8 bar über Umgebungsdruck betreibbar. Ferner ist das Minimalmengen-Mischgerät mit einem Durchfluss bzw. Volumenstrom des Fluids von 50 bis 400 l/min, insbesondere von 100 bis 350 l/min und insbesondere von 150 bis 300 l/min und mit einem Durchfluss bzw. Volumenstrom des Schmiermittels von 0 bis 500 ml/h, insbesondere von 1 bis 400 ml/h und insbesondere von 5 bis 300 ml/h betreibbar (11 = 1 dm³ = 0,001 m³).

Eine Bearbeitungsvorrichtung nach Anspruch 5 ermöglicht in einfacher und flexibler Weise die Einstellung des Durchflusses des Fluids, insbesondere des Schmiermittel-Fluid-Gemischs. Das zweite Ventil ermöglicht insbesondere eine stufenweise und/oder kontinuierliche Einstellung des Durchflusses des Fluids, insbesondere des Schmiermittel-Fluid-Gemischs. Insbesondere dient das zweite Ventil als Absperrventil, sodass die Zuführung des Fluids, insbesondere des Schmiermittel-Fluid-Gemischs zu der Werkzeugspindel bei Bedarf absperrbar ist. Das zweite Ventil ist insbesondere mittels der Steuereinheit ansteuerbar.

Eine Bearbeitungsvorrichtung nach Anspruch 6 gewährleistet eine optimale Werkstückbearbeitung. Durch den mindestens einen Messsensor ist das Kühlfluid und/oder das Fluid und/oder das Schmiermittel-Fluid-Gemisch exakt einstellbar bzw. zuführbar. Vorzugsweise weist die Bearbeitungsvorrichtung einen ersten Durchfluss-Messsensor zur Messung des Durchflusses des Kühlfluids und/oder einen zweiten Durchfluss-Messsensor zur Messung des Durchflusses des Fluids, insbesondere des Schmiermittel-Fluid-Gemischs, auf. Der jeweilige Durchfluss-Messsensor ist vorzugsweise zwischen der zugehörigen Bereitstellungseinheit und der Werkzeugspindel angeordnet. Der erste Durchfluss-Messsensor und/oder der zweite Durchfluss-Messsensor sind vorzugsweise in Signalverbindung mit der Steuereinheit, sodass mittels eines zugehörigen Ventils eine Regelung des Durchflusses des Kühlfluids und/oder des Fluids, insbesondere des Schmiermittel-Fluid-Gemischs, erzielbar ist. Alternativ oder zusätzlich weist die Bearbeitungsvorrichtung mindestens einen Temperatur-Messsensor auf, der insbesondere eine Messung der Temperatur T_{K} des Kühlfluids und/oder der Temperatur T_{G} des Fluids, insbesondere des Schmiermittel-Fluid-Gemischs, und/oder einer Temperatur T_{M} einer Mischung des Kühlfluids und des Fluids, insbesondere des Schmiernittel-Fluid-Gemischs, ermöglicht. Der mindestens eine Temperatur-Messsensor ist vorzugsweise in Signalverbindung mit der Steuereinheit, sodass mittels eines zugehörigen Ventils eine Regelung des Durchflusses des Kühlfluids und/oder des Fluids und/oder des Schmiermittel-Fluid-Gemischs erzielbar ist.

Vorzugsweise wird mittels des mindestens einen Temperatur-Messsensors die Temperatur T_{G} des Fluids, insbesondere des Schmiermittel-Fluid-Gemischs, und/oder die Temperatur T_{M} der Mischung des Kühlfluids und des Fluids, insbesondere des Schmiermittel-Fluid-Gemischs, gemessen. Hierzu ist der mindestens eine Temperatur-Messsensor insbesondere im Bereich einer Mischkammer der Werkzeugspindel und/oder im Bereich einer Werkzeug-Mischkammer des Bearbeitungswerkzeugs bzw. des zugehörigen Werkzeughalters bzw. Spannabschnitts angeordnet. Vorzugsweise ist der mindestens eine Temperatur-Messsensor bei Anordnung in der Werkzeugspindel im Bereich der Spanneinheit angeordnet. Die Daten- bzw. Signalübertragung zu der Steuereinheit erfolgt kabelfrei bzw. drahtlos.

Eine Bearbeitungsvorrichtung nach Anspruch 7 ermöglicht in einfacher Weise das Zuführen des Kühlfluids. Die Rohrleitung ist vorzugsweise an einer Zuführseite in einer fest mit dem Gehäuse verbundenen Anschlusseinheit bzw. Drehdurchführung drehbar gelagert. An einer Abführseite ist die Rohrleitung vorzugsweise in der Spanneinheit gelagert. Dadurch, dass die Rohrleitung entsprechend dem Bearbeitungswerkzeug rotiert, findet zwischen dem Bearbeitungswerkzeug und der Rohrleitung keine Relativdrehbewegung statt. Die Rohrleitung bildet mit ihrem Innenraum den ersten Zuführkanal aus.

Eine Bearbeitungsvorrichtung nach Anspruch 8 ermöglicht in flexibler Weise die Zuführung eines kryogenen Kühlfluids. Die Rohrleitung weist insbesondere eine spezifische Wärmeleitfähigkeit bei 0°C von höchstens 0,40 W/(mK), insbesondere von höchstens 0,30 W/(mK), insbesondere von höchstens 0,20 W/(mK) und insbesondere von höchstens 0,10 W/(mK) auf. Durch die thermisch isolierende Ausbildung wird eine unerwünschte Erwärmung des kryogenen Kühlfluids sowie eine unerwünschte Abkühlung der mit der Rohrleitung in Kontakt stehenden Bauteile vermieden. Die Rohrleitung ist beispielsweise vakuumisoliert oder aus einem Faserverbundmaterial, insbesondere aus einem kohlenstofffaserverstärkten Kunststoff (CFK) ausgebildet. Eine Rohrleitung aus einem Faserverbundmaterial weist zudem eine hohe mechanische Stabilität auf, sodass eine hohe Zuverlässigkeit und Robustheit bei hohen Bearbeitungsdrehzahlen erzielbar ist. Die Rohrleitung kann eine Metallhülse, insbesondere eine Stahlhülse, umfassen. Die Rohrleitung wird auch als Lanze bezeichnet.

Eine Bearbeitungsvorrichtung nach Anspruch 9 ermöglicht in einfacher Weise das Zuführen des Fluids, insbesondere des Schmiermittel-Fluid-Gemischs. Die Anordnung der Zuführkanäle gewährleistet einen kompakten Aufbau der Werkzeugspindel. Ist der erste Zuführkanal durch eine Rohrleitung ausgebildet, wird durch die Wand der Rohrleitung - bei entsprechender Materialwahl - insbesondere ein Wärmefluss ermöglicht. Die Wand der Rohrleitung dient dementsprechend als Wärmetauscher zwischen dem Fluid, insbesondere dem Schmiermittel-Fluid-Gemisch, und dem Kühlfluid. Hierdurch wird eine effiziente Kühlung des Fluids, insbesondere des Schmiermittel-Fluid-Gemischs, durch das Kühlfluid erzielt. Insbesondere wird das Fluid, insbesondere das Schmiermittel-Fluid-Gemisch, bereits vor der Mischung mit dem Kühlfluid gekühlt.

Eine Bearbeitungsvorrichtung nach Anspruch 10 ermöglicht auf einfache Weise die Ausbildung eines ringförmigen zweiten Zuführkanals. Die Rohrleitung ist vorzugsweise zusammen mit der Betätigungsstange zum Spannen und/oder Lösen eines Bearbeitungswerkzeugs in Richtung der Drehachse verlagerbar. Zum Spannen und/oder Lösen eines Bearbeitungswerkzeugs ist die Betätigungsstange vorzugsweise mit einer Betätigungseinheit gekoppelt. Die Betätigungseinheit ist beispielsweise pneumatisch, hydraulisch oder elektromechanisch ausgebildet. Vorzugsweise ist die Betätigungseinheit als Kolben-Zylinder-Einheit oder als Antriebsmotor mit einem Lineargetriebe ausgebildet.

Eine Bearbeitungsvorrichtung nach Anspruch 11 gewährleistet ein einfaches axiales Zuführen und Abführen des Kühlfluids.

Eine Bearbeitungsvorrichtung nach Anspruch 12 ermöglicht ein einfaches Zuführen des Fluids, insbesondere des Schmiermittel-Fluid-Gemischs, in den zweiten Zuführkanal, insbesondere wenn der zweite Zuführkanal den ersten Zuführkanal ringförmig umgibt. Vorzugsweise weist der zweite Zuführkanal mindestens eine zweite Abführöffnung auf, die relativ zu der Drehachse in axialer Richtung und/oder in radialer Richtung angeordnet ist.

Eine Bearbeitungsvorrichtung nach Anspruch 13 gewährleistet eine einfache und zuverlässige Zuführung des Fluids, insbesondere des Schmiermittel-Fluid-Gemischs. Durch das Umlenkelement wird das radial zuge führte Fluid, insbesondere das Schmiermittel-Fluid-Gemisch, in axialer Richtung umgelenkt, sodass der zweite Zufuhrkanal einen geringen Strömungswiderstand aufweist. Vorzugsweise weist das Umlenkelement mindestens eine Leitfläche auf, die ausgehend von der zweiten Zufuhröffnung in axialer Richtung gekrümmt ist. Das Umlenkelement ist vorzugsweise um die Drehachse drehantreibbar. Vorzugsweise ist das Umlenkelement hierzu mit der Betätigungsstange und/oder der den ersten Zuführkanal ausbildenden Rohrleitung gekoppelt. Durch das drehantreibbare Umlenkelement erzeugt dieses eine Strömung des Fluids, insbesondere des Schmiermittel-Fluid-Gemischs, in axialer Richtung. Vorzugsweise weist das drehantreibbare Umlenkelement mehrere rotationssymmetrisch angeordnete Leitflächen auf. Die Leitflächen sind insbesondere turbinenschaufelartig ausgebildet.

Eine Bearbeitungsvorrichtung nach Anspruch 14 ermöglicht in einfacher und flexibler Weise die Verwendung von herkömmlichen Bearbeitungswerkzeugen mit einem einzigen axialen Werkzeug-Zuführkanal. Dadurch, dass die Zuführkanäle innerhalb des Gehäuses, insbesondere im Bereich der Spanneinheit ineinander bzw. in einen Mischraum münden, wird eine Mischung des Kühlfluids und des Fluids, insbesondere des Schmiermittel-Fluid-Gemisch, vor dem Bearbeitungswerkzeug gebildet, sodass die Mischung durch einen Werkzeug-Zuführkanal zu mindestens einer Schneide des Werkzeugs geführt werden kann.

Der Erfindung liegt ferner die Aufgabe zugrunde, ein Verfahren zu schaffen, das in einfacher und flexibler Weise für verschiedenste Zerspanungsprozesse und/oder Werkstoffe eine optimale Bearbeitung von Werkstücken ermöglicht.

Diese Aufgabe wird durch ein Verfahren mit den Merkmalen des Anspruchs 15 gelöst. Durch das zeitgleiche Zuführen eines Kühlfluids und eines Fluids, insbesondere eines Schmiermittel-Fluid-Gemischs, ist eine optimale Kühlung und/oder Schmierung bei der Werkstückbearbeitung möglich, insbesondere da das Kühlfluid unabhängig von dem Fluid, insbesondere dem Schmiermittel-Fluid-Gemisch, zuführbar bzw. einstellbar ist. Die Werkstückbearbeitung ist somit in einfacher und flexibler Weise auf unterschiedliche Zerspanungsprozesse und/oder Werkstoffe optimierbar. Dadurch, dass das Kühlfluid und das Fluid, insbesondere das Schmiermittel-Fluid-Gemisch, durch das Bearbeitungswerkzeug zu der mindestens einen Schneide geführt werden, ist eine exakte Zuführung an die mindestens einen Schneide möglich.

Erfordert die Werkstückbearbeitung ein ausschließliches Zuführen des Kühlfluids oder ein ausschließliches Zuführen des Fluids, insbesondere des Schmiermittel-Fluid-Gemischs, so wird die Bearbeitungsvorrichtung in diesen Betriebsarten betrieben. Hierdurch ist eine optimale Anpassung des Bearbeitungsverfahrens und eine optimale Werkstückbearbeitung möglich.

Ein Verfahren nach Anspruch 16 ermöglicht die Zuführung einer Mischung des Kühlfluids und des Fluids, insbesondere des Schmiermittel-Fluid-Gemischs, zu der mindestens einen Schneide. Dadurch, dass das Kühlfluid und das Fluid, insbesondere das Schmiermittel-Fluid-Gemisch, bereits vor der mindestens einen Schneide, insbesondere in einem Mischraum des Bearbeitungswerkzeugs oder in einem Mischraum der Werkzeugspindel miteinander gemischt werden, ist die zu der mindestens einen Schneide zugeführte Mischung homogen, sodass eine gleichbleibende Bearbeitungsqualität gewährleistet ist.

Ein Verfahren nach Anspruch 17 gewährleistet in einfacher Weise eine effiziente Kühlung bei der Werkstückbearbeitung. Das Kühlfluid ist vorzugsweise ein kryogenes Kühlfluid, das beim Zuführen in die Werkzeugspindel gasförmig oder flüssig ist. Das kryogene Kühlfluid ist vorzugsweise Stickstoff. Insbesondere weist das kryogene Kühlfluid eine Temperatur T_{K} von weniger als -60°C, insbesondere von weniger als -120°C, insbesondere von weniger als -150°C und insbesondere von weniger als -180°C auf. Das Kühlfluid kann weiterhin eine Temperatur T_{K} von mindestens -60°C, insbesondere von mindestens -50°C und insbesondere von mindestens -40°C aufweisen. Beispielsweise kann Luft mit einer Temperatur T_{K} zugeführt werden, wobei gilt: -60 C° ≤ T_{K} ≤ -10 C°. Durch die Mindesttemperatur wird ein kaltes Kühlfluid gewährleistet, jedoch ist der Isolationsaufwand in der Werkzeugspindel im Vergleich zur Zuführung von kryogenen Kühlfluiden mit geringen Temperaturen T_{K} vergleichsweise geringer.

Ein Verfahren nach Anspruch 18 ermöglicht in einfacher und flexibler Weise eine Kühlung des Fluids, insbesondere des Schmiermittel-Fluid-Gemischs. Die beim Mischen des Kühlfluids mit dem Fluid, insbesondere dem Schmiermittel-Fluid-Gemisch, entstehende Mischung weist eine Temperatur T_{M} auf, die je nach Temperatur T_{K} des Kühlfluids und des Durchflusses des Kühlfluids kleiner als die Temperatur T_{G} des Fluids, insbesondere des Schmiermittel-Fluid-Gemischs, ist. Durch die Temperatur T_{K} und/oder den Durchfluss des Kühlfluids ist die Temperatur T_{M} einfach und flexibel einstellbar. Ist der erste Zuführkanal durch eine Rohrleitung ausgebildet, die von dem zweiten Zuführkanal ringförmig umgeben ist, so wirkt die Rohrleitung bei entsprechender Ausbildung als Wärmetauscher, sodass das Fluid, insbesondere das Schmiermittel-Fluid-Gemisch bereits während dem Zuführen in der Werkzeugspindel gekühlt wird.

Ein Verfahren nach Anspruch 19 gewährleistet eine optimale Werkstückbearbeitung. Je nach Werkstückbearbeitung wird das Schmiermittel-Fluid-Gemisch mit minimaler Menge an Schmiermittel zugeführt, sodass einerseits Schmiermittel eingespart und andererseits die Entsorgung von mit Schmiermittel verunreinigten Spänen minimiert wird.

Weitere Merkmale, Vorteile und Einzelheiten der Erfindung ergeben sich aus der nachfolgenden Beschreibung mehrerer Ausführungsbeispiele. Es zeigen:
- Fig. 1: eine schematische Ansicht einer Bearbeitungsvorrichtung zum Bearbeiten von Werkstücken mit einer Werkzeugspindel zur Zuführung eines Kühlfluids und eines Fluids, insbesondere eines Schmiermittel-Fluid-Gemischs, zu einem Bearbeitungswerkzeug gemäß einem ersten Ausführungsbeispiel,
- Fig. 2: einen Axialschnitt durch die Werkzeugspindel und das gespannte Bearbeitungswerkzeug in Fig. 1,
- Fig. 3: einen vergrößerten Ausschnitt der Werkzeugspindel in Fig. 2 im Bereich einer Spanneinheit,
- Fig. 4: einen vergrößerten Ausschnitt der Werkzeugspindel in Fig. 2 im Bereich einer Spindel,
- Fig. 5: einen vergrößerten Ausschnitt der Werkzeugspindel in Fig. 2 im Bereich einer Anschlusseinheit,
- Fig. 6: einen Schnitt durch die Anschlusseinheit entlang der Schnittlinie VI-VI in Fig. 5,
- Fig. 7: einen Axialschnitt durch das in der Werkzeugspindel gespannte Bearbeitungswerkzeug,
- Fig. 8: einen vergrößerten Ausschnitt des Bearbeitungswerkzeugs in Fig. 7 im Bereich eines Spannabschnitts,
- Fig. 9: einen Schnitt durch das Bearbeitungswerkzeug entlang der Schnittlinie IX-IX in Fig. 8,
- Fig. 10: einen vergrößerten Ausschnitt eines Bearbeitungswerkzeugs gemäß einem zweiten Ausführungsbeispiel im Bereich eines Spannabschnitts,
- Fig. 11: einen Schnitt durch das Bearbeitungswerkzeug entlang der Schnittlinie XI-XI in Fig. 10,
- Fig. 12: einen Axialschnitt durch eine Werkzeugspindel und ein darin gespanntes Bearbeitungswerkzeug gemäß einem dritten Ausführungsbeispiel, und
- Fig. 13: einen Axialschnitt durch eine Werkzeugspindel und ein darin gespanntes Bearbeitungswerkzeug gemäß einem vierten Ausführungsbeispiel.

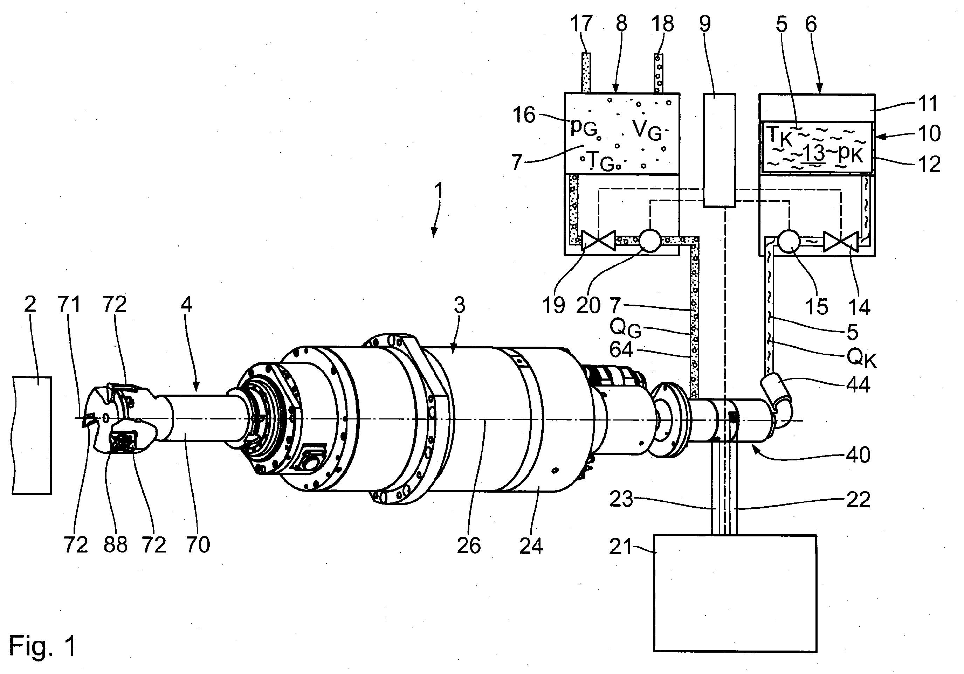

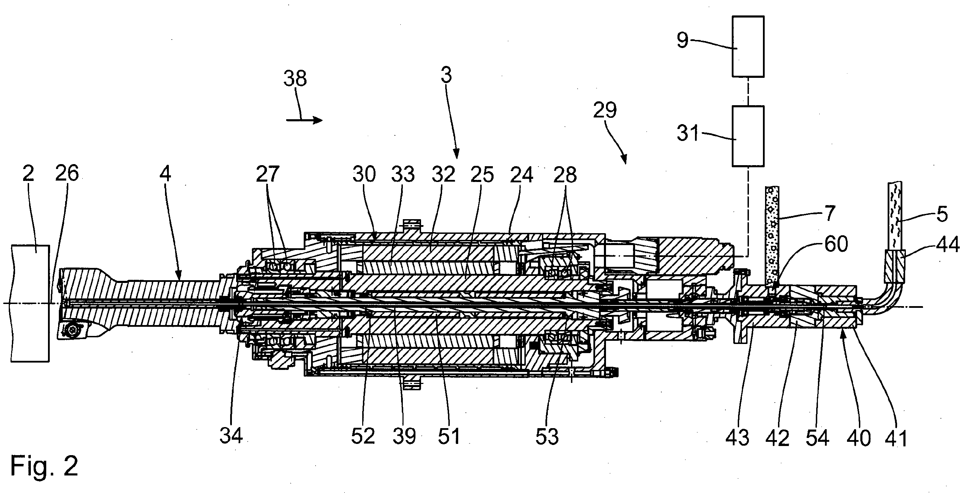

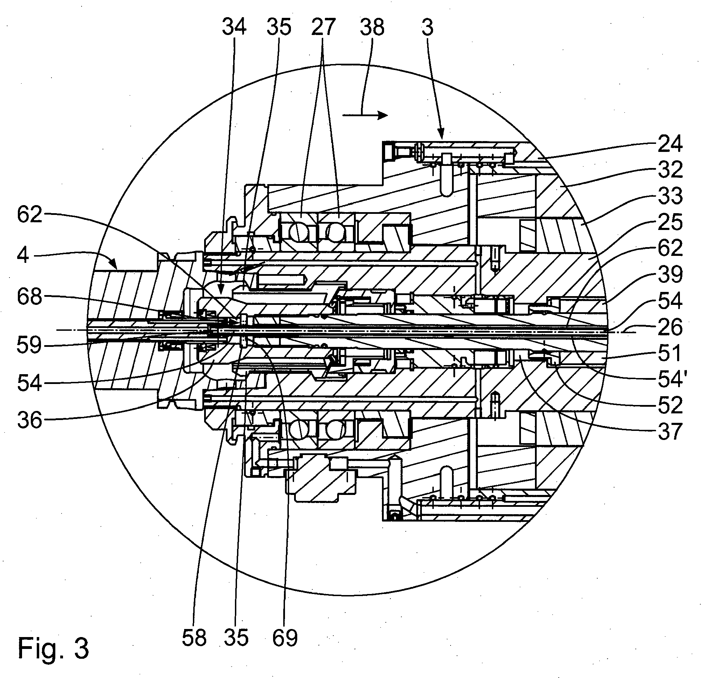

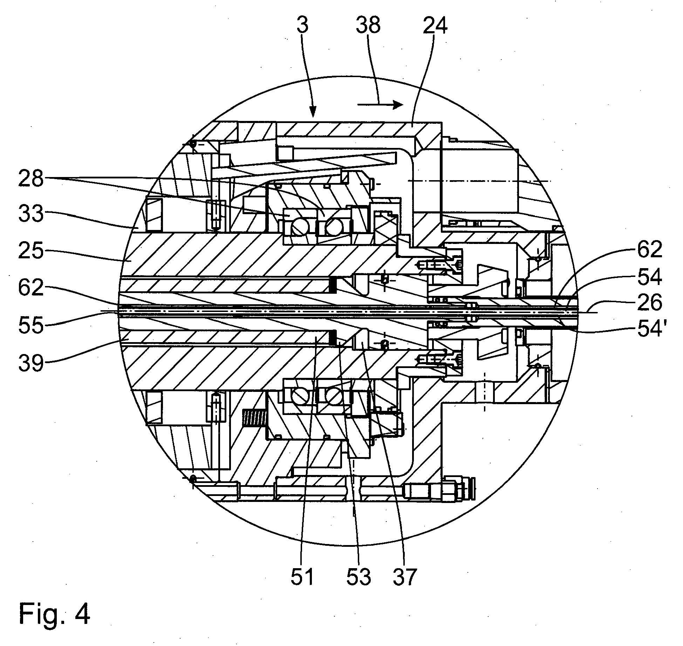

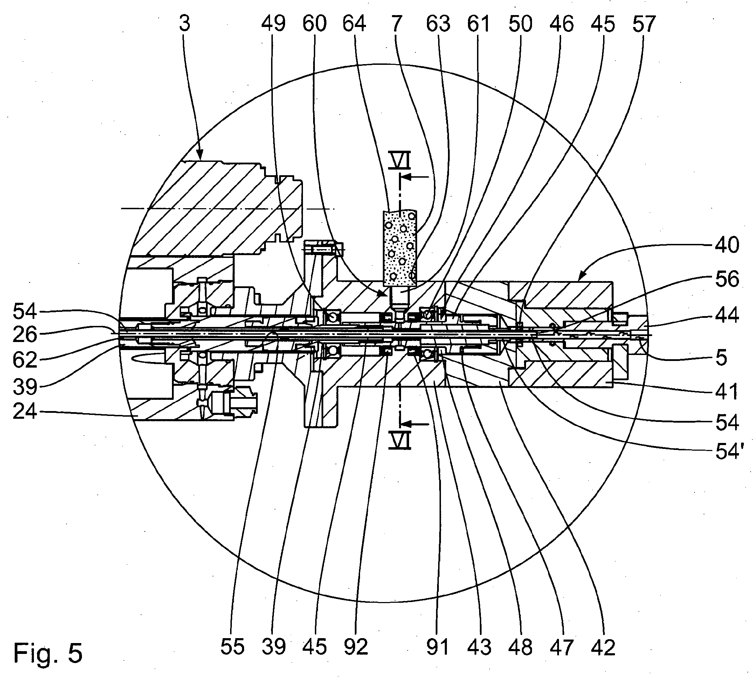

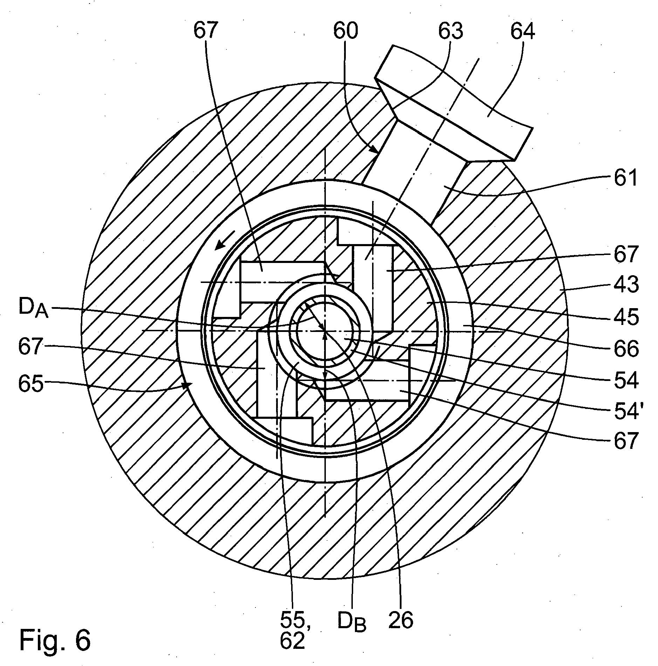

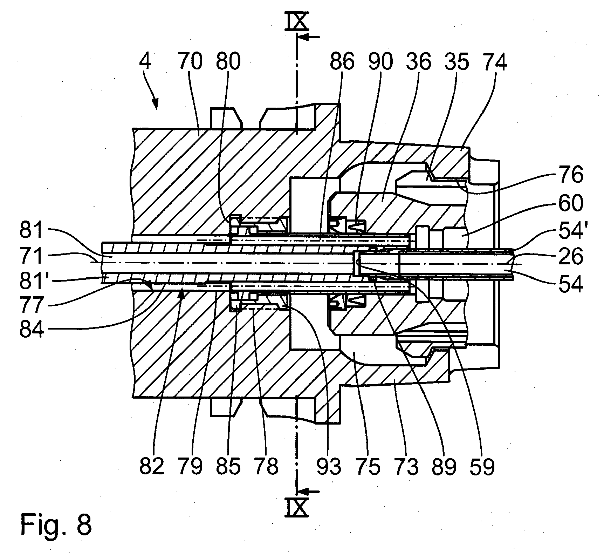

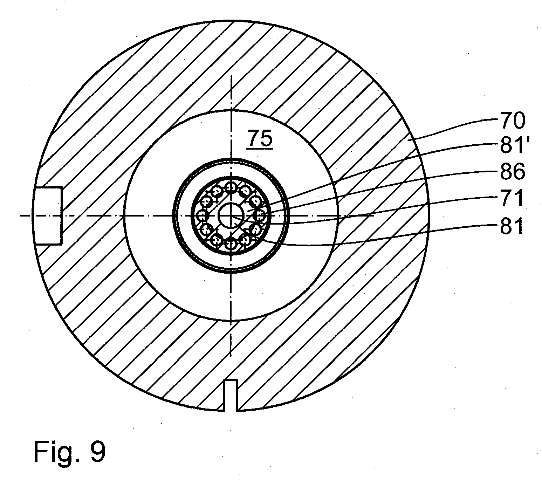

Nachfolgend ist anhand der Fig. 1 bis 9 ein erstes Ausführungsbeispiel der Erfindung beschrieben. Eine Bearbeitungsvorrichtung 1 weist zur spanenden Bearbeitung von Werkstücken 2 eine Werkzeugspindel 3 auf, in der ein Bearbeitungswerkzeug 4 gespannt ist. Die Bearbeitungsvorrichtung 1 weist zum Bereitstellen eines Kühlfluids 5 eine erste Bereitstellungseinheit 6 und zum Bereitstellen eines Fluids 18, insbesondere eines Schmiermittel-Fluid-Gemischs 7 eine zweite Bereitstellungseinheit 8 auf. Die Bereitstellungseinheiten 6, 8 werden mittels einer Steuereinheit 9 angesteuert.

Die erste Bereitstellungseinheit 6 umfasst einen Druckspeicher 10, der mittels eines Kühlaggregats 11 kühlbar ist. Eine Außenwandung 12 des Druckspeichers 10 ist zur Vermeidung einer unerwünschten Erwärmung des Kühlfluids 5 isoliert ausgebildet. In einem Innenraum 13 des Druckspeichers 10 ist das Kühlfluid 5 mit einem Druck p_{K} und einer Temperatur T_{K} speicherbar. Der Druck p_{K} beträgt insbesondere mindestens 1,5 bar, insbesondere mindestens 3 bar und insbesondere mindestens 5 bar über Umgebungsdruck. Zur Zuführung des Kühlfluids 5 zu der Werkzeugspindel 3 weist die Bereitstellungseinheit 6 ein einstellbares erstes Ventil 14 und einen Durchfluss-Messsensor 15 auf, die in Signalverbindung mit der Steuereinheit 9 sind. Mittels des ersten Ventils 14 ist somit eine Einstellung bzw. Regelung eines Durchflusses bzw. des Volumenstroms Q_{K} des Kühlfluids möglich.

Die zweite Bereitstellungseinheit 8 umfasst ein Mischgerät 16 zur Herstellung des Schmiermittel-Fluid-Gemischs 7 aus einem Schmiermittel 17 und einem Fluid 18. Das Fluid 18 ist insbesondere ein Gas. Das Mischgerät 16 ist insbesondere als Minimalmengen-Mischgerät 16 zur Minimalmengenschmierung betreibbar. Das Mischgerät 16 ist insbesondere derart betreibbar, dass der Anteil des Schmiermittels 17 bis auf Null reduzierbar ist, sodass ausschließlich das Fluid 18 zuführbar ist. Das Fluid 18 ist insbesondere ein Gas, wie beispielsweise Luft. Die zweite Bereitstellungseinheit 8 umfasst weiterhin ein einstellbares zweites Ventil 19 und einen zweiten Durchfluss-Messsensor 20, die mit der Steuereinheit 9 in Signalverbindung sind. Mittels des Mischgeräts 16 ist das Fluid 18, insbesondere das Schmiermittel-Fluid-Gemisch 7, mit einem Druck p_{G}, einer Temperatur T_{G} und in einem Mischverhältnis V_{G} bereitstellbar. Ein Durchfluss bzw. Volumenstrom Q_{G} des Fluids 18, insbesondere des Schmiermittel-Fluid-Gemischs 7, ist mittels des Ventils 19 einstellbar bzw. regelbar.

Die Bearbeitungsvorrichtung 1 ist Teil einer nicht näher dargestellten Werkzeugmaschine zur Bearbeitung von metallischen Werkstücken 2. Hierzu ist die Steuereinheit 9 derart ausgebildet, dass wahlweise folgende Betriebsarten einstellbar sind:
a) Zuführung des Kühlfluids 5 zu der Werkzeugspindel 3 ohne eine zeitgleiche Zuführung des Fluids 18 bzw. des Schmiermittel-Fluid-Gemischs 7,
b) Zuführung des Fluids 18, insbesondere des Schmiermittel-Fluid-Gemischs 7, insbesondere zur Minimalmengenschmierung, zu der Werkzeugspindel 3 ohne eine zeitgleiche Zuführung des Kühlfluids 5, und
c) zeitgleiche Zuführung des Kühlfluids 5 und des Fluids 18, insbesondere des Schmiermittel-Fluid-Gemischs 7, zu der Werkzeugspindel 3.

Die Durchflüsse bzw. Volumenströme Q_{K} und Q_{G} sind mittels der Ventile 14, 19 und der zugehörigen Durchfluss-Messsensoren 15, 20 je nach Bedarf mittels der Steuereinheit 9 einstellbar. Hierdurch wird auf einfache und flexible Weise eine optimale Werkstückbearbeitung in Abhängigkeit des Zerspanungsprozesses und/oder des zu zerspanenden Werkstoffs ermöglicht.

Zum Spannen und Lösen eines Bearbeitungswerkzeugs 4 umfasst die Bearbeitungsvorrichtung 1 eine Betätigungseinheit 21. Die Betätigungseinheit ist beispielsweise hydraulisch ausgebildet und wird nachfolgend auch als Hydraulikeinheit 21 bezeichnet. Die Hydraulikeinheit 21 ist über zwei Druckleitungen 22, 23 an die Werkzeugspindel 3 angeschlossen, sodass durch Druckbeaufschlagung der Druckleitung 22 oder 23 ein Lösen oder Spannen des Bearbeitungswerkzeugs 4 ermöglicht wird. Die Betätigungseinheit 21 ist zum Spannen und Lösen des jeweiligen Bearbeitungswerkzeugs 4 in Signalverbindung mit der Steuereinheit 9.

Die Werkzeugspindel 3 weist ein Gehäuse 24 auf, in dem eine Spindel 25 in üblicher Weise um eine Drehachse 26 mittels Lagern 27, 28 drehbar gelagert ist. Zum Drehantreiben des Bearbeitungswerkzeugs 4 weist die Bearbeitungsvorrichtung 1 eine Antriebseinheit 29 mit einem Antriebsmotor 30 und einer zugehörigen Antriebselektronik 31 auf. Der Antriebsmotor umfasst einen Stator 32, der fest mit dem Gehäuse 24 verbunden ist, und einen zugehörigen Rotor 33, der fest mit der Spindel 25 verbunden ist und diese um die Drehachse 26 drehantreibt. Die Antriebselektronik 31 dient zur Energieversorgung des Antriebsmotors 30 und ist zur Ansteuerung des Antriebsmotors 30 in Signalverbindung mit der Steuereinheit 9.

Zum Spannen und Lösen eines Bearbeitungswerkzeugs 4 weist die Werkzeugspindel 3 eine Sparmeinheit 34 auf. Die Sparmeinheit 34 umfasst mehrere Spannzangen 35 sowie einen zugehörigen Spannkonus 36. Die Spanneinheit 34 ist innerhalb einer konzentrisch zur Drehachse 26 ausgebildeten Bohrung 37 der Spindel 25 angeordnet. Die Spannzangen 35 sind um die Drehachse 26 verteilt innerhalb der Bohrung 37 angeordnet und in radialer Richtung verschwenkbar an der Spindel 25 gelagert. Konzentrisch zu der Drehachse 26 ist der Spannkonus 36 angeordnet und von den Spannzangen 35 umgeben. Durch axiales Verschieben des Spannkonus 36 in einer Spannrichtung 38 werden die Spannzangen 35 in radialer Richtung aufgespreizt, wohingegen die Spannzangen 35 durch Verlagern des Spannkonus 36 entgegen die Spannrichtung 38 in einen nicht-aufgespreizten Lösezustand überführbar sind.

Der Spannkonus 36 ist zum axialen Verlagern mit einer Betätigungsstange 39 verbunden. Die Betätigungsstange 39 ist konzentrisch zu der Drehachse 26 angeordnet und verläuft durch die Bohrung 37 bis zu einem der Spanneinheit 34 abgewandten Ende des Gehäuses 24. Zum Erzeugen einer Spannkraft ist mindestens ein Federelement 51 vorgesehen, dass zwischen einem Spindelanschlag 52 und einem Betätigungsstangenanschlag 53 in der Bohrung 37 angeordnet ist. Vorzugsweise ist das mindestens eine Federelement 51 als Tellerfeder-Paket ausgebildet, das konzentrisch zu der Drehachse 26 angeordnet ist und die Betätigungsstange 39 umgibt.

An dem der Spanneinheit 34 abgewandten Ende des Gehäuses 24 ist eine Anschlusseinheit 40 konzentrisch zu der Drehachse 26 an dem Gehäuse 24 befestigt. Die Anschlusseinheit 40 weist einen ersten Anschlussabschnitt 41 für das Kühlfluid 5, einen zweiten Anschlussabschnitt 42 für die Hydraulikeinheit 21 und einen dritten Anschlussabschnitt 43 für das Fluid 18 bzw. das Schmiermittel-Fluid-Gemisch 7 auf.

Der erste Anschlussabschnitt 41 dient zur Zuführung des Kühlfluids 5. Hierzu ist eine erste Versorgungsleitung 44 koaxial zu der Drehachse 26 an dem ersten Anschlussabschnitt 41 lösbar befestigt. Der zweite Anschlussabschnitt 42 dient zum Anschließen der Druckleitungen 22, 23 der Hydraulikeinheit 21. In dem zweiten Anschlussabschnitt 42 ist ein axial verschiebbarer Kolben 45 gelagert, sodass der Kolben 45 und der zweite Anschlussabschnitt 42 eine Kolben-Zylinder-Einheit ausbilden. Der Kolben 45 unterteilt einen durch den zweiten Anschlussabschnitt 42 ausgebildeten Zylinder-Innenraum 46 in zwei Teilräume 47, 48. Die Druckleitungen 22, 23 münden jeweils in einen der Teilräume 47, 48. Der Zylinder-Innenraum 46 ist in üblicherweise gedichtet. Der Kolben 45 ist durch den dritten Anschlussabschnitt 43 geführt und endseitig mit der Betätigungsstange 39 verbunden. Die Betätigungsstange 39 und der damit verbundene Kolben 45 sind in dem dritten Anschlussabschnitt 43 mittels Lagern 49, 50 drehbar gelagert. Die Anschlusseinheit 40 ist mit dem dritten Anschlussabschnitt 43 fest mit dem Gehäuse 24 verbunden. Die Anschlusseinheit 40 wird auch als Drehdurchführung bezeichnet.

Zum Zuführen des Kühlfluids 5 zu dem Bearbeitungswerkzeug 4 ist innerhalb der Werkzeugspindel 3 ein erster Zuführkanal 54 ausgebildet. Der erste Zuführkanal 54 ist durch eine Rohrleitung 54' gebildet. Die Rohrleitung 54' ist konzentrisch zu der Drehachse 26 angeordnet und erstreckt sich von der Anschlusseinheit 40 bis zu der Spanneinheit 34. Hierzu ist in dem Kolben 45 und der Betätigungsstange 39 eine Axialbohrung 55 ausgebildet, in der die Rohrleitung 54' angeordnet ist. Die Rohrleitung 54' ist axial und radial fest mit der Betätigungsstange 39 verbunden, sodass die Rohrleitung 54' mit der Spindel 25 und der Betätigungsstange 39 drehantreibbar ist und bei einem Wechsel des Bearbeitungswerkzeugs 4 mit der Betätigungsstange 39 axial verschiebbar ist. Die Rohrleitung 54' ist somit relativ zu dem Gehäuse 24 um die Drehachse 26 drehbar gelagert.

Die Rohrleitung 54' ist thermisch isolierend ausgebildet. Hierzu weist die Rohrleitung 54' eine spezifische Wärmeleitfähigkeit bei 0 C° von höchstens 0,80 W/(mK), insbesondere von höchstens 0,40 W/(mK), insbesondere von höchstens 0,30 W/(mK), insbesondere von höchstens 0,20 W/(mK) und insbesondere von höchstens 0,10 W/(mK) auf.

Die Rohrleitung 54' ist beispielsweise als vakuumisolierte Rohrleitung ausgebildet. Hierzu weist die Rohrleitung 54' ein inneres Rohr und ein dieses umgebendes äußeres Rohr auf, die endseitig miteinander verbunden sind. Der von den Rohren begrenzte Isolationsraum ist evakuiert, wodurch die Rohrleitung 54' eine äußerst geringe spezifische Wärmeleitfähigkeit aufweist. Um einen Ausgleich der unterschiedlichen Längenänderungen des inneren und des äußeren Rohrs aufgrund des Kühlfluids 5 zu ermöglichen, ist das innere Rohr und/oder das äußere Rohr in seiner Länge veränderbar. Wird die Rohrleitung 54' beispielsweise von einem kryogenen Kühlfluid 5 durchströmt, nimmt das innere Rohr im Wesentlichen dessen Temperatur an, wohingegen sich das äußere Rohr aufgrund des zwischen beiden Rohren angeordneten Isolationsmediums deutlich weniger abkühlt. Das innere Rohr ändert seine Länge dementsprechend deutlich mehr als das äußere Rohr. Um eine Beschädigung der Rohrleitung 54' zu vermeiden, ist mindestens eines der Rohre in seiner Länge veränderbar. Vorzugsweise weist das äußere Rohr einen mäanderförmigen Metallbalg zum thermischen Längenausgleich auf. Weiterhin ist die Rohrleitung 54' beispielsweise aus einem Faserverbundmaterial ausgebildet, insbesondere aus einem kohlenstofffaserverstärkten Kunststoff (CFK).

Die Rohrleitung 54' ist mit ihrem zuführseitigen Ende im befestigten Zustand der Versorgungsleitung 44 in diese eingeschoben. Eine erste Zuführöffnung 56 des ersten Zuführkanals 54 bzw. der Rohrleitung 54' ist somit konzentrisch zu der Drehachse 26 angeordnet. Die Rohrleitung 54' ist mittels eines ringförmigen Dichtelements 57 gegenüber dem ersten Anschlussabschnitt 41 abgedichtet. Das Dichtelement 57 ist beispielsweise aus PTFE (Polytetrafluorethylen) ausgebildet. An einem abführseitigen Ende ist die Rohrleitung 54' mittels eines Lagerelements 58 konzentrisch zu der Drehachse 26 in dem Spannkonus 36 gelagert. Eine erste Abführöffnung 59 des ersten Zuführkanals 54 bzw. der Rohrleitung 54' ist somit konzentrisch zu der Drehachse 26 angeordnet. Die Rohrleitung 54' endet innerhalb des Spannkonus 36.

Zum Zuführen des Fluids 18 bzw. des Schmiermittel-Fluid-Gemischs 7 zu dem Bearbeitungswerkzeug 4 weist die Werkzeugspindel 3 weiterhin einen zweiten Zuführkanal 60 auf. Der zweite Zuführkanal 60 umfasst einen ersten Kanalabschnitt 61, der radial zu der Drehachse 26 verläuft, und einen zweiten Kanalabschnitt 62, der konzentrisch zu der Drehachse 26 verläuft. Der erste Kanalabschnitt 61 ist in dem dritten Anschlussabschnitt 43 ausgebildet und verläuft in radialer Richtung bis zu der Axialbohrung 55. Der erste Kanalabschnitt 61 bildet somit eine dem Bearbeitungswerkzeug 4 abgewandte zweite Zuführöffnung 63 aus, die relativ zu der Drehachse 26 in einer radialen Richtung angeordnet ist. An die zweite Zuführöffnung 63 ist eine zweite Versorgungsleitung 64 angeschlossen, durch die das Fluids 18 bzw. das Schmiermittel-Fluid-Gemisch 7 zuführbar ist.

Zum Abdichten des ersten Kanalabschnitts 61 sind in axialer Richtung beidseitig von diesem zwei ringförmige Dichtelemente 91, 92 angeordnet, die gegen den Kolben 45 und den dritten Anschlussabschnitt 43 anliegen. Die Dichtelemente 91, 92 sind zwischen den Lagern 49, 50 angeordnet. Die Dichtelemente 91, 92 sind beispielsweise aus PTFE. Der erste Kanalabschnitt 61 mündet über einen Umlenkabschnitt 65 in den zweiten Kanalabschnitt 62.

Der Umlenkabschnitt 65 umfasst einen Ringraum 66, in den der erste Kanalabschnitt 61 mündet und in dem ein Teil des Kolbens 45 konzentrisch zu der Drehachse 26 angeordnet ist. Der drehantreibbare Kolben 45 ist im Bereich des Ringraums 66 als Umlenkelement ausgebildet, sodass das durch die zweite Zuführöffnung 63 radial zugeführte Fluid 18 bzw. das Schmiermittel-Fluid-Gemisch 7 in axialer Richtung umlenkbar ist. Hierzu sind in dem Kolben 45 mehrere, beispielsweise vier Leit-Kanalabschnitte 67 rotationssymmetrisch zu der Drehachse 26 ausgebildet. Die Leit-Kanalabschnitte 67 weisen jeweils mindestens eine Leitfläche auf, die derart gekrümmt ist, dass das Fluid 18 bzw. das Schmiermittel-Fluid-Gemisch 7 von der radialen Richtung des ersten Kanalabschnitts 61 in die axiale Richtung des zweiten Kanalabschnitts 62 umgelenkt und in Richtung des Bearbeitungswerkzeugs 4 gefördert wird. Die Leitflächen sind vorzugsweise turbinenschaufelartig ausgebildet.

Die Leit-Kanalabschnitte 67 münden in den zweiten Kanalabschnitt 62. Der zweite Kanalabschnitt 62 ist ringförmig ausgebildet und umgibt den ersten Zuführkanal 54 bzw. die Rohrleitung 54'. Der zweite Kanalabschnitt 62 wird somit einerseits durch die Rohrleitung 54' und andererseits durch den Kolben 45, die Betätigungsstange 39 und den Spannkonus 36 begrenzt. Der zweite Kanalabschnitt 62 ist somit als Ringraum ausgebildet. Der Ringraum weist eine radiale Abmessung auf, die durch einen Außendurchmesser D_{A} der Rohrleitung 54' und einen jeweiligen Bohrungsdurchmesser D_{B} der Axialbohrung 55 definiert ist.

Der zweite Zuführkanal 60 weist eine zweite Abführöffnung 68 auf, die im Bereich des Spannkonus 36 angeordnet ist. Die zweite Abführöffnung 68 ist ringförmig ausgebildet und wird von der Rohrleitung 54' und dem Spannkonus 36 in radialer Richtung begrenzt. Das Lagerelement 58 weist zum Durchführen des Fluids 18 bzw. des Schmiermittel-Fluid-Gemischs 7 mehrere Durchbrechungen 69 auf. Die Zuführkanäle 54 und 60 sind somit über ihre gesamte Länge separat ausgebildet, sodass das Kühlfluid 5 und das Fluid 18, insbesondere das Schmiermittel-Fluid-Gemisch 7, bei gleichzeitiger Zuführung innerhalb der Werkzeugspindel 3 nicht mischbar sind.

Das Bearbeitungswerkzeug 4 weist einen Grundkörper 70 auf, der mittels der Werkzeugspindel 3 um eine Werkzeug-Drehachse 71 drehantreibbar ist. Die Werkzeug-Drehachse 71 fluchtet im gespannten Zustand des Bearbeitungswerkzeugs 4 mit Drehachse 26. An einem werkstückseitigen Ende des Bearbeitungswerkzeugs 4 sind an dem Grundkörper 70 mehrere Schneiden 72 befestigt, die rotationssymmetrisch um die Werkzeug-Drehachse 71 verteilt sind.

Zum Spannen des Bearbeitungswerkzeugs 4 ist an dem Grundkörper 70 ein Spannabschnitt 73 ausgebildet. In dem Spannabschnitt 73 ist der Grundkörper 70 ringförmig geformt und weist an einem der Werkzeugspindel 3 zugewandten Ende einen ringförmigen Haltevorsprung 74 auf. Der Spannabschnitt 73 begrenzt einen Aufnahmeraum 75, der zu der Werkzeugspindel 3 hin eine Öffnung 76 aufweist. Die Öffnung 76 wird durch den Haltevorsprung 74 in radialer Richtung begrenzt. Die Öffnung 76 und der zugehörige Aufnahmeraum 75 dienen zum Einführen und Aufnehmen der Spanneinheit 34.

Ausgehend von dem Aufnahmeraum 75 erstreckt sich eine Axialbohrung 77 konzentrisch zu der Drehachse 71 bis an das werkstückseitige Ende des Grundkörpers 70. Die Axialbohrung 77 ist als Sacklochbohrung ausgebildet und durchbricht den Grundkörper 70 an dem werkstückseitigen Ende nicht. Die Axialbohrung 77 weist benachbart zu dem Aufnahmeraum 75 einen ersten Bohrungsabschnitt 78 mit einem Bohrungsdurchmesser D_{WB1} und einen nachfolgenden zweiten Bohrungsabschnitt 79 mit einem zweiten Bohrungsdurchmesser D_{WB2} auf. Der erste Bohrungsdurchmesser D_{WB1} ist größer als der zweite Bohrungsdurchmesser D_{WB2}, sodass die Bohrungsabschnitte 78, 79 einen Ringanschlag 80 ausbilden.

In der Axialbohrung 77 ist ein erster Werkzeug-Zuführkanal 81 zum Aufnehmen des Kühlfluids 5 aus dem ersten Zuführkanal 54 und ein zweiter Werkzeug-Zuführkanal 82 zum Aufnehmen des Fluids 18 bzw. des Schmiermittel-Fluid-Gemischs 7 aus dem zweiten Zuführkanal 60 ausgebildet. Hierzu ist der erste Werkzeug-Zuführkanal 81 durch eine Werkzeug-Rohrleitung 81' ausgebildet. Die Werkzeug-Rohrleitung 81' wird auch als Werkzeug-Lanze bezeichnet. Die Werkzeug-Rohrleitung 81' ist beispielsweise aus einem kohlenstofffaserverstärkten Kunststoff (CFK) oder aus PTFE ausgebildet.

Die Werkzeug-Rohrleitung 81' ist mittels eines Befestigungselements 93 in axialer Richtung fixiert. Das Befestigungselement 93 ist in dem ersten Bohrungsabschnitt 78 angeordnet. Das Befestigungselement 93 ist beispielsweise als Befestigungsmutter ausgebildet, die mit dem Grundkörper 70 eine Schraubverbindung ausbildet.

Die Werkzeug-Rohrleitung 81' erstreckt sich ausgehend von dem Aufnahmeraum 75 bis zu einem Werkzeug-Mischraum 83, der an dem werkstückseitigen Ende der Axialbohrung 77 ausgebildet ist. Die Werkzeug-Rohrleitung 81' ist konzentrisch zu der Drehachse 71 angeordnet und weist einen Außendurchmesser D_{WA} auf, der im Bereich des zweiten Bohrungsabschnitts 79 kleiner als der Bohrungsdurchmesser D_{WB2} ist, sodass die Werkzeug-Rohrleitung 81' und der Grundkörper 70 einen Ringraum 84 bilden. Im Bereich des ersten Bohrungsabschnitts 78 sowie im Aufnahmeraum 75 weist die Werkzeug-Rohrleitung 81' eine im Vergleich zu dem zweiten Bohrungsabschnitt 79 vergrößerte Wandstärke auf, sodass die Werkzeug-Rohrleitung 81' einen Gegenanschlag 85 für den Ringanschlag 80 ausbildet. Zusätzlich sind in der Werkzeug-Rohrleitung 81' an dem der Werkzeugspindel 3 zugewandten Ende mehrere Verbindungskanäle 86 ausgebildet, die ausgehend von der freien Stirnseite in axialer Richtung bis zu dem Ringraum 84 verlaufen. Die Verbindungskanäle 86 und der Ringraum 84 bilden den zweiten Werkzeug-Zuführkanal 82.

Ausgehend von dem Mischraum 83 verlaufen Verteilerkanäle 87 zu den Schneiden 72. Die Verteilerkanäle 87 weisen jeweils eine Werkzeug-Austrittöffnung 88 auf, durch die das Kühlfluid 5 und/oder das Fluid 18 und/oder das Schmiermittel-Fluid-Gemisch 7 im Bereich der Schneiden 72 aus dem Bearbeitungswerkzeug 4 austreten kann. Die Werkzeug-Zuführkanäle 81, 82 münden zur Erzeugung einer Mischung aus dem Kühlfluid 5 und dem Fluid 18, insbesondere dem Schmiermittel-Fluid-Gemisch 7, in den Mischraum 83.

In dem Mischraum 83 ist ein Temperatur-Messsensor 100 angeordnet. Mittels des Temperatur-Messsensors 100 ist eine Temperatur T_{M} einer Mischung aus dem Kühlfluid 5 und dem Fluid 18, insbesondere dem Schmiermittel-Fluid-Gemisch 7, messbar und drahtlos an die Steuereinheit 9 übertragbar. Mittels des Temperatur-Messsensors 100 ist eine Einstellung des Durchflusses Q_{K} des Kühlfluids 5 und/oder des Durchflusses Q_{G} des Fluids 18, insbesondere des Schmiermittel-Fluid-Gemischs 7, möglich.

Die Werkzeug-Rohrleitung 81' ist derart ausgebildet, dass die Rohrleitung 54' im gespannten Zustand des Bearbeitungswerkzeugs 4 in die Werkzeug-Rohrleitung 81' eingeschoben ist. Zum Abdichten der Rohrleitungen 54', 81' ist an einer Innenwand der Werkzeug-Rohrleitung 81' ein ringförmiges Dichtelement 89 angeordnet. Das Dichtelement 89 ist beispielsweise aus PTFE. Weiterhin ist die Werkzeug-Rohrleitung 81' derart ausgebildet, dass diese in den Spannkonus 36 einschiebbar ist. Im gespannten Zustand des Bearbeitungswerkzeugs 4 ist die Wandung der Werkzeug-Rohrleitung 81' somit in den Ringraum zwischen der Rohrleitung 54' und dem Spannkonus 36 angeordnet, sodass die Zuführkanäle 54' und 81' sowie 60 und 82 miteinander verbunden sind. Zum Abdichten der Zuführkanäle 60 und 82 ist an einer Innenwand des Spannkonus 36 ein ringförmiges Dichtelement 90 angeordnet. Das Dichtelement 90 ist beispielsweise aus PTFE.

Die Betriebsweise der Bearbeitungsvorrichtung 1 ist wie folgt:

Zum Spannen eines Bearbeitungswerkzeugs 4 wird zunächst die Spanneinheit 34 betätigt und in einen geöffneten Zustand überführt. Hierzu wird mittels der Hydraulikeinheit 21 die Druckleitung 22 mit Druck beaufschlagt, sodass der Teilraum 47 mit einem Druckmedium gefüllt und der Kolben 45 entgegen der Spannrichtung 38 axial verlagert wird. Über die Betätigungsstange 39 wird die axiale Bewegung des Kolbens 45 auf den Spannkonus 36 übertragen, sodass dieser von den Spannzangen 35 wegbewegt wird, wodurch die Spannzangen 35 gelöst werden. Die Rohrleitung 54' wird zusammen mit der Betätigungsstange 39 axial verlagert. Die Betätigungsstange 39 wird entgegen der Vorspannkraft des mindestens einen Federelements 51 axial verlagert.

Anschließend wird in üblicherweise ein Bearbeitungswerkzeug 4 in der Werkzeugspindel 3 gespannt. Hierzu wird das Bearbeitungswerkzeug 4beispielsweise mit einem üblichen Werkzeugwechsler - in axialer Richtung zu der Sparmeinheit 34 bewegt, sodass die Spannzangen 35 sowie der Spannkonus 36 endseitig in dem Aufnahmeraum 75 angeordnet werden. Hierbei wird die Wandung der Werkzeug-Rohrleitung 81' in den Ringraum zwischen der Rohrleitung 54' und den Spannkonus 36 eingeführt.

Anschließend wird das Bearbeitungswerkzeug 4 gespannt. Hierzu wird mittels der Hydraulikeinheit 21 die Druckleitung 23 mit Druck beaufschlagt, sodass der Teilraum 48 mit dem Druckmedium gefüllt und der Kolben 45 axial in der Spannrichtung 38 verlagert wird. Die axiale Bewegung wird durch das mindestens eine Federelement 51 unterstützt. Durch die axiale Bewegung des Kolbens 45 sowie der Betätigungsstange 39 wird der Spannkonus 36 ebenfalls in der Spannrichtung 38 verlagert, wodurch die Spannzangen 35 in üblicherweise aufgespreizt werden und zum Spannen des Bearbeitungswerkzeugs 4 mit dem Haltevorsprung 74 eine Hinterschneidung ausbilden. Die Rohrleitung 54' wir zusammen mit der Betätigungsstange 39 in der Spannrichtung 38 verlagert. Die Werkzeug-Rohrleitung 81' verbleibt hierbei jedoch endseitig mit ihrer Wandung in dem Ringraum zwischen der Rohrleitung 54' und dem Spannkonus 36. Das Bearbeitungswerkzeug 4 ist nun gespannt und die Zuführkanäle 54 und 81 sowie 60 und 82 sind miteinander verbunden.

Zur Werkstückbearbeitung wird die Spindel 25 sowie das gespannte Bearbeitungswerkzeug 4 mittels der Antriebseinheit 29 drehangetrieben. Die Spanneinheit 34, die Betätigungsstange 39, der Kolben 45 sowie die Rohrleitung 54' werden zusammen mit der Spindel 25 drehangetrieben. Zur Werkstückbearbeitung können - je nach Zerspanungsprozess und Werkstoff des zu bearbeitenden Werkstücks 2 - mittels der Steuereinheit 9 wahlweise folgende Betriebsarten eingestellt werden:

In einer ersten Betriebsart wird dem Bearbeitungswerkzeug 4 ausschließlich das Kühlfluid 5 zugeführt. Es wird somit zeitgleich kein Fluid bzw. Schmiermittel-Fluid-Gemisch 7 zugeführt. Hierzu wird das erste Ventil 14 geöffnet und mittels des Durchfluss-Messsensors 15 und der Steuereinheit 9 ein gewünschter Durchfluss Q_{K} des Kühlfluids 5 eingestellt. Das zweite Ventil 19 bleibt in der ersten Betriebsart abgesperrt.

Das Kühlfluid 5 strömt somit aus dem Druckspeicher 10 über die Versorgungsleitung 44 zu der Anschlusseinheit 40. Im Bereich des ersten Anschlussabschnitts 41 strömt das Kühlfluid 5 durch die erste Zuführöffnung 56 in den Innenraum der Rohrleitung 54' und bis zu der im Bereich der Spanneinheit 34 angeordneten Abführöffnung 59. Dort tritt das Kühlfluid 5 in den Innenraum der Werkzeug-Rohrleitung 81' ein und strömt durch den Grundkörper 70 bis zu dem Mischraum 83, wo aufgrund des fehlenden Schmiermittel-Fluid-Gemischs 7 keine Mischung stattfindet. Von dem Mischraum 83 strömt das Kühlfluid 5 durch die Verteilerkanäle 87 zu den Werkzeug-Austrittöffnungen 88 und tritt im Bereich der Schneiden 72 aus. Das Kühlfluid 5 kühlt beim Austritt die Schneiden 72 sowie das in Bearbeitung befindliche Werkstück 2.

Das Kühlfluid 5 weist beim Zuführen in die Werkzeugspindel 3 eine Temperatur T_{K} von höchstens 10 C°, insbesondere von höchstens 0 C°, insbesondere von höchstens -10 C° und insbesondere von höchstens -50 C° auf. Das Kühlfluid ist beispielsweise als kryogenes Kühlfluid 5 ausgebildet und weist vorzugsweise eine Temperatur T_{K} von höchstens -60 C°, insbesondere von höchstens -120 C°, insbesondere von höchstens -150 C° und insbesondere von höchstens -180 C° auf. Das Kühlfluid 5 ist beispielsweise als gekühlte Luft oder flüssiger bzw. gasförmiger Stickstoff ausgebildet. Der Stickstoff verflüchtigt sich nach Austritt aus dem Bearbeitungswerkzeug 4. Das Kühlfluid 5 wird mit einem Druck p_{K} von 1 bis 5 bar über Umgebungsdruck bereitgestellt.

In einer zweiten Betriebsart wird dem Bearbeitungswerkzeug 4 ausschließlich ein Fluid 18, insbesondere ein Schmiermittel-Fluid-Gemisch 7, zugeführt. Es wird somit zeitgleich kein Kühlfluid 5 zugeführt. Hierzu wird das zweite Ventil 19 geöffnet und mittels des Durchfluss-Messsensors 20 ein gewünschter Durchfluss Q_{G} des Fluids 18 bzw. des Schmiermittel-Fluid-Gemischs 7 eingestellt. Das erste Ventil 14 bleibt abgesperrt. Das Schmiermittel-Fluid-Gemisch 7 wird durch das Mischgerät 16 aus einem Schmiermittel 17 und einem Fluid 18 in einem gewünschten Verhältnis V_{G} erzeugt. Das Mischgerät 16 ist vorzugsweise ein Minimalmengen-Mischgerät, das dem Fluid 18 lediglich die minimal erforderliche Menge an Schmiermittel 17 zumischt. Das Fluid 18 ist insbesondere als Gas ausgebildet, beispielsweise als Luft. Das Mischgerät 16 kann mit einem Anteil an Schmiermittel 17 von Null betrieben werden, sodass lediglich das Fluid 18 zugeführt wird. Das Fluid 18 bzw. das Schmiermittel-Fluid-Gemisch 7 wird mit einem Druck p_{G} im Bereich von 1 bis 6 bar über Umgebungsdruck und mit einer gewünschten Temperatur T_{G} bereitgestellt. Die Temperatur T_{G} ist beispielsweise derart einstellbar, dass das Fluid 18 durch Kühlung mit einer gewünschten Temperatur dem Mischgerät 16 bereitgestellt wird.

Das Fluid 18 bzw. das Schmiermittel-Fluid-Gemisch 7 strömt von dem Mischgerät 16 durch die Versorgungsleitung 64 zu der Anschlusseinheit 40. In dem dritten Anschlussabschnitt 43 tritt das Fluid 18 bzw. das Schmiermittel-Fluid-Gemisch 7 durch die zweite Zuführöffnung 63 radial in den ersten Kanalabschnitt 61 ein und wird durch die Drehung des Kolbens 45, der als Umlenkelement wirkt, mittels der Leit-Kanalabschnitte 67 in axialer umgelenkt und gefördert. Das Fluid 18 bzw. das Schmiermittel-Fluid-Gemisch 7 strömt anschließend in axialer Richtung durch den zweiten Kanalabschnitt 62 bis zu der Abführöffnung 68 und tritt dort in die Verbindungskanäle 86 des zweiten Werkzeug-Zuführkanals 82 ein. In dem Bearbeitungswerkzeug 4 strömt das Fluid 18 bzw. das Schmiermittel-Fluid-Gemisch 7 zunächst durch die Verbindungskanäle 86 und anschließend durch den Ringraum 84 bis zu dem Mischraum 83. In dem Mischraum 83 findet aufgrund des fehlenden Kühlfluids 5 keine Mischung statt. Ausgehend von dem Mischraum 83 strömt das Fluid 18 bzw. das Schmiermittel-Fluid-Gemisch 7 durch die Verteilerkanäle 87 und tritt durch die Werkzeug-Austrittsöffnungen 88 im Bereich der Schneiden 72 aus. Die Schneiden 72 werden durch das Schmiermittel-Fluid-Gemisch 7 in üblicherweise geschmiert und in begrenztem Maß gekühlt bzw. durch das Fluid 18 in begrenztem Maß gekühlt. Durch das Zuführen des Schmiermittel-Fluid-Gemischs 7 kann die Werkzeugspindel 3 mit einer üblichen Minimalmengenschmierung betrieben werden.

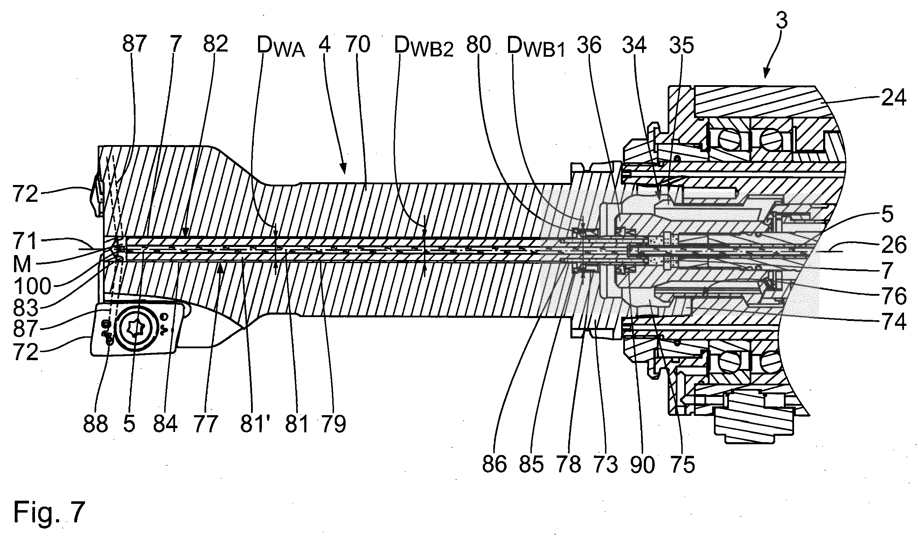

In einer dritten Betriebsart wird dem Bearbeitungswerkzeug 4 zeitgleich das Kühlfluid 5 und das Fluid 18, insbesondere das Schmiermittel-Fluid-Gemisch 7, zugeführt. Hierzu werden mittels der Ventile 14, 19 und der zugehörigen Durchfluss-Messsensoren 15, 20 die gewünschten Durchflüsse Q_{K} für das Kühlfluid 5 und Q_{G} für das Fluid 18 bzw. das Schmiermittel-Fluid-Gemisch 7 eingestellt. Das Kühlfluid 5 strömt - wie zu der ersten Betriebsart beschrieben - bis zu dem Mischraum 83. Entsprechend strömt das Fluid 18 bzw. das Schmiermittel-Fluid-Gemisch 7 - wie zu der zweiten Betriebsart beschrieben - bis zu dem Mischraum 83. In dem Mischraum 83 wird eine Mischung M aus dem Kühlfluid 5 und dem Fluid 18, insbesondere dem Schmiermittel-Fluid-Gemisch 7, erzeugt. Dies ist in Figur 7 veranschaulicht. Die Mischung M strömt durch die Verteilerkanäle 87 und tritt durch die Werkzeug-Austrittsöffnungen 88 im Bereich der Schneiden 72 aus, wo die Schneiden 72 und das in Bearbeitung befindliche Werkstück 2 - je nach Bedarf - geschmiert und/oder gekühlt werden. Zur Kühlung weist das Kühlfluid 5 beim Zuführen in die Werkzeugspindel 3 eine Temperatur T_{K} auf, die kleiner als eine Temperatur T_{G} des Fluids 18 bzw. des Schmiermittel-Fluid-Gemischs 7 beim Zuführen in die Werkzeugspindel 3 ist. Hierdurch weist die Mischung M eine Temperatur T_{M} auf, die - in Abhängigkeit der Temperaturen T_{K} und T_{G} sowie der Durchflüsse Q_{K} und Q_{G} - zwischen den Temperaturen T_{K} und T_{G} liegt. Es gilt somit: T_{K} < T_{M} < T_{G}. Wird in der dritten Betriebsart zeitgleich das Kühlfluid 5 und das Fluid 18, insbesondere ein Gas, wie beispielsweise Luft, zugeführt, so kann eine definierte Kühlung mittels des Fluids 18 erzielt werden. Beispielsweise wird als Kühlfluid 5 ein kryogenes Kühlfluid, insbesondere Stickstoff, zugeführt und als Fluid 18 beispielsweise Luft, sodass in der dritten Betriebsart eine definierte Kühlung mit kalter Luft erzielbar ist. Dies ist insbesondere für eine Werkstückbearbeitung vorteilhaft, bei der keinerlei Schmiermittel 17 zulässig ist.

Für jeden Zerspanungsprozess und jeden Werkstoff kann somit eine der beschriebenen Betriebsarten oder mehrere der beschriebenen Betriebsarten nacheinander mittels der Steuereinheit 9 eingestellt werden. Hierdurch ist eine optimale Werkstückbearbeitung gewährleistet.

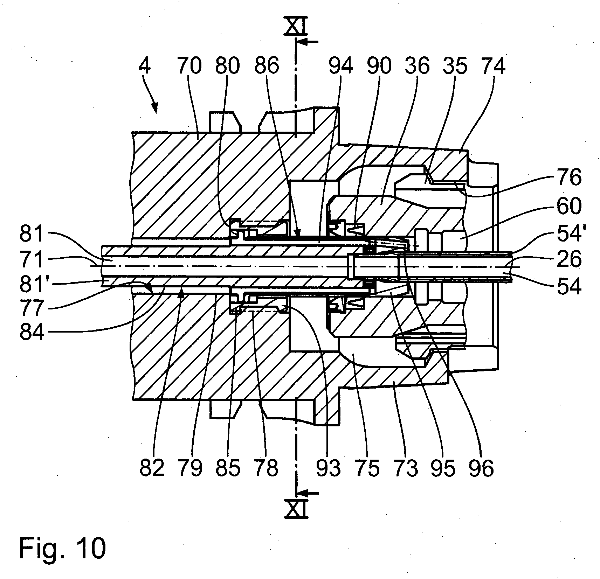

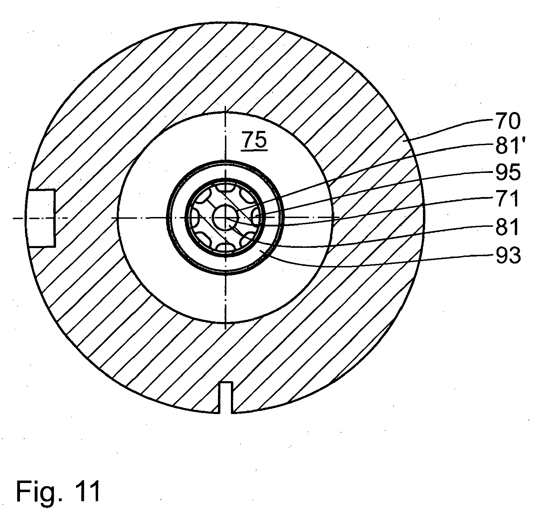

Nachfolgend ist anhand der Fig. 10 und 11 ein zweites Ausführungsbeispiel der Erfindung beschrieben. Die Werkzeug-Rohrleitung 81' weist im Bereich des Aufnahmeraums 75 und des ersten Bohrungsabschnitts 78 an der Außenseite Axialnuten 94 auf, die um die Werkzeug-Drehachse 71 verteilt sind und in axialer Richtung verlaufen. Die Werkzeug-Rohrleitung 81' ist im Bereich der Axialnuten 94 von einer Hülse 95 umgeben, die an einem der Spanneinheit 34 zugewandten Ende mehrere Hülsenkanäle 96 aufweist. Die Hülsenkanäle 96 münden im montierten Zustand der Hülse 95 jeweils in eine Axialnut 94. Ein Hülsenkanal 96 bildet zusammen mit einer durch die Hülse 95 in radialer Richtung begrenzten Axialnut 94 einen Verbindungskanal 86 aus. Durch die Axialnuten 94 haben die Verbindungskanäle 86 einen vergleichsweise größeren Strömungsquerschnitt. Hinsichtlich des weiteren Aufbaus der Bearbeitungsvorrichtung 1 und des Bearbeitungswerkzeugs 4 sowie hinsichtlich deren Funktionsweise wird auf das vorangegangene Ausführungsbeispiel verwiesen.

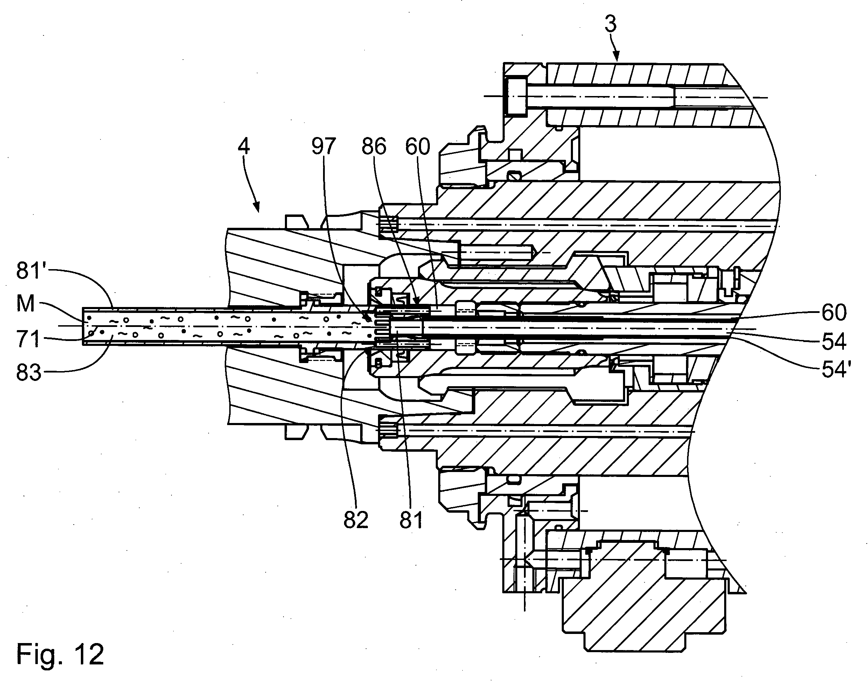

Nachfolgend ist anhand von Fig. 12 ein drittes Ausführungsbeispiel der Erfindung beschrieben. Im Unterschied zu den vorangegangenen Ausführungsbeispielen ist der Werkzeug-Mischraum 83 an einer der Werkzeugspindel 3 zugewandten Seite des Bearbeitungswerkzeugs 4 ausgebildet. Hierzu wird der zweite Werkzeug-Zuführkanal 82 lediglich durch die Verbindungskanäle 86 gebildet, die die Werkzeug-Rohrleitung 81' endseitig durchbrechen und Austrittsöffnungen 97 in den ersten Werkzeug-Zuführkanal 81 ausbilden. Der zweite Werkzeug-Zuführkanal 82 wird somit lediglich durch die Verbindungskanäle 86 gebildet. Der den Austrittsöffnungen 97 nachfolgende Teil der ersten Werkzeug-Rohrleitung 81' bildet somit den Werkzeug-Mischraum 83 aus. Die in dem Mischraum 83 erzeugte Mischung gelangt in der bereits beschriebenen Weise zu den Schneiden 72. Hinsichtlich des weiteren Aufbaus der Bearbeitungsvorrichtung 1 und des Bearbeitungswerkzeugs 4 sowie deren Funktionsweise wird auf die vorangegangenen Ausführungsbeispiele verwiesen.

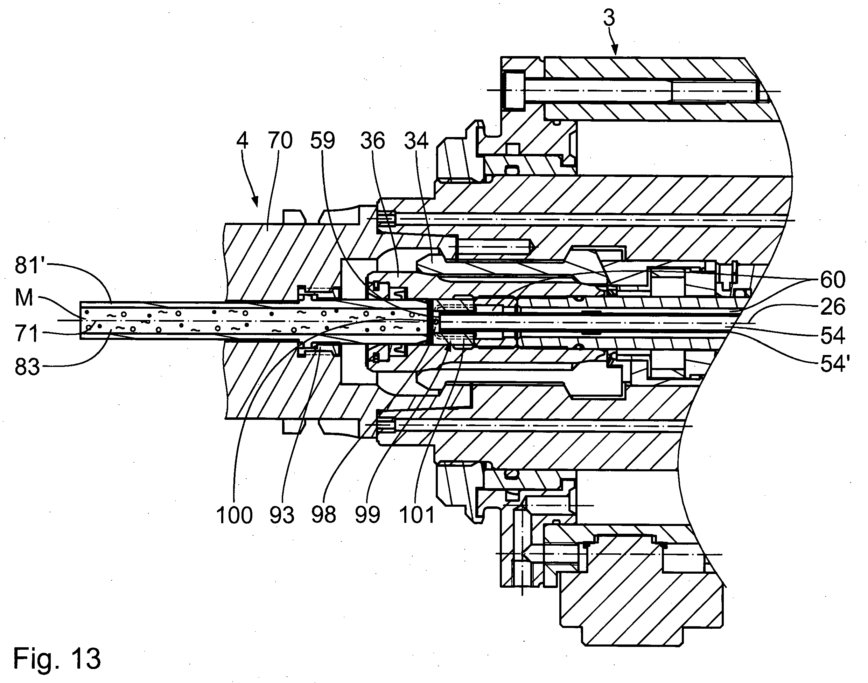

Nachfolgend ist anhand der Fig. 13 ein viertes Ausführungsbeispiel der Erfindung beschrieben. Im Unterschied zu den vorangegangenen Ausführungsbeispielen ist die Werkzeug-Rohrleitung 81' über ihre gesamte Länge als Werkzeug-Mischraum 83 bzw. als ein gemeinsamer Werkzeug-Zuführkanal ausbildet. Das Bearbeitungswerkzeug 4 weist somit keine separaten Werkzeug-Zuführkanäle 81 und 82 auf. Die Mischstelle für das Kühlfluid 5 und das Fluid 18 bzw. das Schmiermittel-Fluid-Gemisch 7 befindet sich in der Werkzeugspindel 3 im Bereich der Spanneinheit 34. Die Zuführkanäle 54, 60 münden in einen zu der Werkzeugspindel 3 gehörigen Mischraum 98, der im gespannten Zustand eines Bearbeitungswerkzeugs 4 in Verbindung mit dem Werkzeug-Mischraum 83 bzw. der Werkzeug-Rohrleitung 81' ist. Hierzu ist die Rohrleitung 54' endseitig in einer Mischhülse 99 gelagert. Die Mischhülse 99 ist zwischen der Rohrleitung 54' und dem Spannkonus 36 angeordnet und weist mehrere um die Drehasche 26 verteilt angeordnete Verbindungskanäle 101 auf. Die Verbindungskanäle 101 verbinden den zweiten Kanalabschnitt 62 mit dem Mischraum 99. Die Verbindungskanäle 101 sind somit Teil des zweiten Zuführkanals 60. In dem Mischraum 98 ist ein Temperatur-Messsensor 100 angeordnet, der beispielsweise in die Mischhülse 99 integriert ist. Mittels des Temperatur-Messsensors 100 ist eine Temperatur T_{M} der Mischung aus dem Kühlfluid 5 und dem Fluid 18 bzw. dem Schmiermittel-Fluid-Gemisch 7 messbar und drahtlos an die Steuereinheit 9 übertragbar. Mittels des Temperatur-Messsensors 100 ist eine Einstellung des Durchflusses Q_{K} des Kühlfluids 5 und/oder des Durchflusses Q_{G} des Fluids 18 bzw. des Schmiermittel-Fluid-Gemischs 7 möglich.

Dadurch, dass die Mischung in der Werkzeugspindel 3 stattfindet, ist das Bearbeitungswerkzeug 4 vergleichsweise einfach aufgebaut, sodass keine zwei separaten Werkzeug-Zuführkanäle erforderlich sind. Derartige Bearbeitungswerkzeuge sind grundsätzlich bereits bekannt. Hinsichtlich des weiteren Aufbaus der Bearbeitungsvorrichtung 1 sowie des Bearbeitungswerkzeugs 4 und deren Funktionsweise wird auf die vorangegangen Ausführungsbeispiele verwiesen.

## Patentansprüche

1. Bearbeitungsvorrichtung zum Bearbeiten von Werkstücken mit
- einer Werkzeugspindel (3) mit
-- einem Gehäuse (24),
-- einer Antriebseinheit (29) zum Drehantreiben eines Bearbeitungswerkzeugs (4), und
-- einer Spanneinheit (34) zum Spannen und Lösen des Bearbeitungswerkzeugs (4),
--- die um eine Drehachse (26) drehbar in dem Gehäuse (24) angeordnet ist und
--- die relativ zu dem Gehäuse (24) mittels der Antriebseinheit (29) um die Drehachse (26) drehantreibbar ist,
-- einem ersten Zuführkanal (54) zum Zuführen eines Kühlfluids (5) zu dem Bearbeitungswerkzeug (4), und
-- einem zweiten Zuführkanal (60) zum Zuführen eines Fluids (18), insbesondere eines Schmiermittel-Fluid-Gemischs (7), zu dem Bearbeitungswerkzeug (4),
- einer ersten Bereitstellungseinheit (6) zum Bereitstellen des Kühlfluids (5),
- einer zweiten Bereitstellungseinheit (8) zum Bereitstellen des Fluids (18), insbesondere des Schmiermittel-Fluid-Gemischs (7), und
- einer Steuereinheit (9) zur Steuerung der Bereitstellungseinheiten (6, 8),
**dadurch gekennzeichnet,**
**dass** die Steuereinheit (9) derart ausgebildet ist, dass wahlweise folgende Betriebsarten einstellbar sind:
a) Zuführung des Kühlfluids (5) zu der Werkzeugspindel (3) ohne eine zeitgleiche Zuführung des Fluids (18), insbesondere des Schmiermittel-Fluid-Gemischs (7),
b) Zuführung des Fluids (18), insbesondere des Schmiermittel-Fluid-Gemischs (7), zu der Werkzeugspindel (3) ohne eine zeitgleiche Zuführung des Kühlfluids (5), und
c) Zeitgleiche Zuführung des Kühlfluids (5) und des Fluids (18), insbesondere des Schmiermittel-Fluid-Gemischs (7).

2. Bearbeitungsvorrichtung nach Anspruch 1, **dadurch gekennzeichnet, dass** die erste Bereitstellungseinheit (6) einen Druckspeicher (10) für das Kühlfluid (5) umfasst, der insbesondere isoliert und/oder kühlbar ist.

3. Bearbeitungsvorrichtung nach Anspruch 1 oder 2, **dadurch gekennzeichnet,**
**dass** die erste Bereitstellungseinheit (6) ein erstes Ventil (14) zur Einstellung eines Durchflusses des Kühlfluids (5) umfasst.

4. Bearbeitungsvorrichtung nach einem der Ansprüche 1 bis 3, **dadurch gekennzeichnet,**
**dass** die zweite Bereitstellungseinheit (8) ein Mischgerät (16) zum Mischen eines Schmiermittels (17) mit einem Fluid (18) umfasst, das insbesondere als Minimalmengen-Mischgerät ausgebildet ist.

5. Bearbeitungsvorrichtung nach einem der Ansprüche 1 bis 4, **dadurch gekennzeichnet,**
**dass** die zweite Bereitstellungseinheit (8) ein zweites Ventil (19) zur Einstellung eines Durchflusses des Fluids (18), insbesondere des Schmiermittel-Fluid-Gemischs (7), umfasst.

6. Bearbeitungsvorrichtung nach einem der Ansprüche 1 bis 5, **gekennzeichnet**
**durch** mindestens einen Messsensor (15, 20, 100) zur Einstellung eines Durchflusses des Kühlfluids (5) und/oder des Fluids (18), insbesondere des Schmiermittel-Fluid-Gemischs (7).

7. Bearbeitungsvorrichtung nach einem der Ansprüche 1 bis 6, **dadurch gekennzeichnet,**
**dass** der erste Zuführkanal (54) durch eine Rohrleitung (54') ausgebildet ist, die konzentrisch zu der Drehachse (26) angeordnet und um diese drehbar in dem Gehäuse (24) gelagert ist.

8. Bearbeitungsvorrichtung nach einem der Ansprüche 1 bis 7, **dadurch gekennzeichnet,**
**dass** der erste Zuführkanal (54) durch eine thermisch isolierende Rohrleitung (54') ausgebildet ist.

9. Bearbeitungsvorrichtung nach einem der Ansprüche 1 bis 8, **dadurch gekennzeichnet,**
**dass** der zweite Zuführkanal (60) zumindest abschnittsweise ringförmig ausgebildet ist und den ersten Zuführkanal (54) umgibt.

10. Bearbeitungsvorrichtung nach einem der Ansprüche 1 bis 9, **dadurch gekennzeichnet,**
**dass** eine mit der Spanneinheit (34) gekoppelte Betätigungsstange (39) eine Axialbohrung (55) mit einem Bohrungsdurchmesser D_{B} aufweist, in der eine Rohrleitung (54') mit einem Außendurchmesser D_{A} angeordnet ist, wobei D_{A} < D_{B} gilt, sodass die Rohrleitung (54') den ersten Zuführkanal (54) und ein Ringraum zwischen der Rohrleitung (54') und der Betätigungsstange (39) zumindest abschnittsweise den zweiten Zuführkanal (60) bildet.

11. Bearbeitungsvorrichtung nach einem der Ansprüche 1 bis 10, **dadurch gekennzeichnet,**
**dass** der erste Zuführkanal (54) eine dem Bearbeitungswerkzeug (4) abgewandte erste Zuführöffnung (56) und eine dem Bearbeitungswerkzeug (4) zugewandte erste Abführöffnung (59) aufweist, die konzentrisch zu der Drehachse (26) angeordnet sind.

12. Bearbeitungsvorrichtung nach einem der Ansprüche 1 bis 11, **dadurch gekennzeichnet,**
**dass** der zweite Zuführkanal (60) eine dem Bearbeitungswerkzeug (4) abgewandte zweite Zuführöffnung (63) aufweist, die in einer radialen Richtung relativ zu der Drehachse (26) angeordnet ist.

13. Bearbeitungsvorrichtung nach Anspruch 12, **dadurch gekennzeichnet, dass** in dem zweiten Zuführkanal (60) ein Umlenkelement (45) angeordnet ist, das derart ausgebildet ist, dass das durch die zweite Zuführöffnung (63) radial zugeführte Fluid (18), insbesondere das Schmiermittel-Fluid-Gemisch (7), in axialer Richtung umlenkbar ist.

14. Bearbeitungsvorrichtung nach einem der Ansprüche 1 bis 13, **dadurch gekennzeichnet,**
**dass** die Zuführkanäle (54, 60) in einen Mischraum (98) münden, der insbesondere im Bereich der Spanneinheit (34) ausgebildet ist.

15. Verfahren zum Bearbeiten von Werkstücken umfassend folgende Schritte:
- Bereitstellen einer Bearbeitungsvorrichtung (1) mit
-- einer Werkzeugspindel (3) mit einem Gehäuse (24), einer Antriebseinheit (29) zum Drehantreiben eines Bearbeitungswerkzeugs (4), und einer Spanneinheit (34) zum Spannen und Lösen des Bearbeitungswerkzeugs (4), die um eine Drehachse (26) drehbar in dem Gehäuse (24) angeordnet ist und die relativ zu dem Gehäuse (24) mittels der Antriebseinheit (29) um die Drehachse (26) drehantreibbar ist, einem ersten Zuführkanal (54) zum Zuführen eines Kühlfluids (5) zu dem Bearbeitungswerkzeug (4), und einem zweiten Zuführkanal (60) zum Zuführen eines Fluids (18), insbesondere eines Schmiermittel-Fluid-Gemisches (7), zu dem Bearbeitungswerkzeug (4),
-- einer ersten Bereitstellungseinheit (6) zum Bereitstellen des Kühlfluids (5),
-- einer zweiten Bereitstellungseinheit (8) zum Bereitstellen des Fluids (18), insbesondere des Schmiermittel-Fluid-Gemisches (7), und
-- einer Steuereinheit (9) zur Steuerung der Bereitstellungseinheiten (6, 8),
-- sowie mit einem in der Werkzeugspindel (3) gespannten Bearbeitungswerkzeug (4),
- Bearbeiten eines Werkstücks (2) mit dem Bearbeitungswerkzeug (4), wobei die Bearbeitungsvorrichtung (1) in folgenden Betriebsarten betrieben wird:
a) Zuführen des Kühlfluids (5) zu der Werkzeugspindel (3) ohne ein zeitgleiches Zuführen des Fluids (18), insbesondere des Schmiermittel-Fluid-Gemischs (7),
b) Zuführen des Fluids (18), insbesondere des Schmiermittel-Fluid-Gemischs (7) zu der Werkzeugspindel (3) ohne ein zeitgleiches Zuführen des Kühlfluids (5), und
c) Zeitgleiches Zuführen des Kühlfluids (5) und des Fluids (18), insbesondere des Schmiermittel-Fluid-Gemischs (7),
durch das Bearbeitungswerkzeug (4) zu mindestens einer Schneide (72) des Bearbeitungswerkzeugs (4) während des Bearbeitens des Werkstücks (2).

16. Verfahren nach Anspruch 15, **dadurch gekennzeichnet,**
**dass** das Kühlfluid (5) und das Fluid (18), insbesondere das Schmiermittel-Fluid-Gemisch (7) vor der mindestens einen Schneide (72), insbesondere in dem Bearbeitungswerkzeug (4) oder in der Werkzeugspindel (3), gemischt werden.

17. Verfahren nach Anspruch 15 oder 16, **dadurch gekennzeichnet, dass** das Kühlfluid (5) beim Zuführen in die Werkzeugspindel (3) eine Temperatur T_{K} von höchstens 10 °C, insbesondere von höchstens 0 °C, insbesondere von höchstens -10 °C, und insbesondere von höchstens -50 °C hat.

18. Verfahren nach einem der Ansprüche 15 bis 17, **dadurch gekennzeichnet,**
**dass** das Kühlfluid (5) beim Zuführen in die Werkzeugspindel (3) eine Temperatur T_{K} hat, die kleiner als eine Temperatur T_{G} des Fluids (18), insbesondere des Schmiermittel-Fluid-Gemischs (7) beim Zuführen in die Werkzeugspindel (3) ist.

19. Verfahren nach einem der Ansprüche 15 bis 18, **dadurch gekennzeichnet,**
**dass** das Zuführen des Schmiermittel-Fluid-Gemischs (7) in die Werkzeugspindel (3) als Minimalmengenschmierung erfolgt.

## Claims

1. Machining device for machining workpieces, the machining device comprising comprising
- a tool spindle (3) comprising
-- a casing (24);
-- a drive unit (29) allowing a machining tool (4) to be driven for rotation; and
-- a clamping unit (34) for clamping and releasing the machining tool (4), which clamping unit (34)
--- is arranged in the casing (24) so as to be rotatable about an axis of rotation (26); and
--- is drivable, by means of the drive unit (29), for rotation about the axis of rotation (26) relative to the casing (24);
-- a first supply channel (54) for supplying a cooling fluid (5) to the machining tool (4); and
-- a second supply channel (60) for supplying a fluid (18), in particular a lubricant-fluid mixture (7), to the machining tool (4),
- a first provision unit (6) for providing the cooling fluid (5);
- a second provision unit (8) for providing the fluid (18), in particular the lubricant-fluid mixture (7), and
- a control unit (9) for controlling the provision units (6, 8), **characterized**
**in that** the control unit (9) is configured in such a way that the following modes of operation are selectable:
a) supplying the cooling fluid (5) to the tool spindle (3) without supplying the fluid (18), in particular the lubricant-fluid mixture (7), at the same time;
b) supplying the fluid (18), in particular the lubricant-fluid mixture (7), to the tool spindle (3) without supplying the cooling fluid (5) at the same time; and
c) supplying the cooling fluid (5) and the fluid (18), in particular the lubricant-fluid mixture (7), at the same time.

2. Machining device according to claim 1, **characterized in that** the first provision unit (6) comprises a pressure storage device (10) for the cooling fluid (5) which is in particular insulated and/or coolable.

3. Machining device according to claim 1 or 2, **characterized in that** the first provision unit (6) comprises a first valve (14) for adjusting a flow rate of the cooling fluid (5).

4. Machining device according to one of claims 1 to 3, **characterized in that** the second provision unit (8) comprises a mixing device (16) for mixing a lubricant (17) with a fluid (18), which mixing device (16) is in particular configured as a minimum quantity mixing device.

5. Machining device according to one of claims 1 to 4, **characterized in that** the second provision unit (8) comprises a second valve (19) for adjusting a flow rate of the fluid (18), in particular the lubricant-fluid mixture (7).

6. Machining device according to one of claims 1 to 5, **characterized by** at least one measuring sensor (15, 20, 100) for adjusting a flow rate of the cooling fluid (5) and/or the fluid (18), in particular the lubricant-fluid mixture (7).

7. Machining device according to one of claims 1 to 6, **characterized in that** the first supply channel (54) is formed by a pipe (54') which is arranged concentrically to the axis of rotation (26) and is mounted in the casing (24) for rotation about said axis of rotation (26).

8. Machining device according to one of claims 1 to 7, **characterized in that** the first supply channel (54) is formed by a thermally insulating pipe (54').

9. Machining device according to one of claims 1 to 8, **characterized in that** the second supply channel (60) is at least partly annular and surrounds the first supply channel (54).

10. Machining device according to one of claims 1 to 9, **characterized in that** an actuation rod (39) coupled to the clamping unit (34) has an axial bore (55) with a bore diameter D_{B} in which a pipe (54') having an outer diameter D_{A} is arranged, wherein D_{A} < D_{B} so that the pipe (54') forms the first supply channel (54) and an annular space between the pipe (54') and the actuation rod (39) forms at least part of the second supply channel (60).

11. Machining device according to one of claims 1 to 10, **characterized in that** the first supply channel (54) has a first supply opening (56) remote from the machining tool (4) and a first discharge opening (59) facing the machining tool (4) which are in each case arranged concentrically to the axis of rotation (26).

12. Machining device according to one of claims 1 to 11, **characterized in that** the second supply channel (60) has a second supply opening (63) remote from the machining tool (4) which is arranged in a radial direction relative to the axis of rotation (26).

13. Machining device according to claim 12, **characterized in that** a deflection member (45) is arranged in the second supply channel (60) which is configured in such a way that the fluid (18), in particular the lubricant-fluid mixture (7), supplied radially via the second supply opening (63) is deflectable into the axial direction.

14. Machining device according to one of claims 1 to 13, **characterized in that** the supply channels (54, 60) open into a mixing space (98) which is in particular formed in the region of the clamping unit (34).

15. Method for machining workpieces, the method comprising the following steps:
- providing a machining device (1) comprising
-- a tool spindle (3) comprising a casing (24), a drive unit (29) allowing a machining tool (4) to be driven for rotation, and a clamping unit (34) for clamping and releasing the machining tool (4), which clamping unit (34) is arranged in the casing (24) so as to be rotatable about an axis of rotation (26) and is drivable, by means of the drive unit (29), for rotation about the axis of rotation (26) relative to the casing (24), a first supply channel (54) for supplying a cooling fluid (5) to the machining tool (4), a second supply channel (60) for supplying a fluid (18), in particular a lubricant-fluid mixture (7), to the machining tool (4),
-- a first provision unit (6) for providing the cooling fluid (5);
-- a second provision unit (8) for providing the fluid (18), in particular the lubricant-fluid mixture (7), and
-- a control unit (9) for controlling the provision units (6, 8), as well as a machining tool (4) clamped in the tool spindle (3);
- machining a workpiece (2) by means of the machining tool (4), wherein the machining device (1) is operatable in the following modes of operation:
a) supplying the cooling fluid (5) to the tool spindle (3) without supplying the fluid (18), in particular the lubricant-fluid mixture (7), at the same time; and
b) supplying the fluid (18), in particular the lubricant-fluid mixture (7), to the tool spindle (3) without supplying the cooling fluid (5) at the same time; and
c) simultaneously supplying the cooling fluid (5) and the fluid (18), in particular the lubricant-fluid mixture (7),
via the machining tool (4) to at least one cutting edge (72) of the machining tool (4) during machining of the workpiece (2).

16. Method according to claim 15, **characterized in that** the cooling fluid (5) and the fluid (18), in particular the lubricant-fluid mixture (7), are mixed in front of the at least one cutting edge (72), in particular in the machining tool (4) or in the tool spindle (3).

17. Method according to claim 15 or 16, **characterized in that** when supplied to the tool spindle (3), the cooling fluid (5) has a temperature T_{K} of no more than 10°C, in particular of no more than 0°C, in particular of no more than -10°C, and in particular of no more than -50°C.

18. Method according to one of claims 15 to 17, **characterized in that** when supplied to the tool spindle (3), the cooling fluid (5) has a temperature T_{K} which is lower than a temperature T_{G} of the fluid (18), in particular the lubricant-fluid mixture (7), when supplied to the tool spindle (3).

19. Method according to one of claims 15 to 18, **characterized in that** the lubricant-fluid mixture (7) is supplied to the machine tool (3) in the form of a minimum quantity lubrication.

## Revendications

1. Dispositif d'usinage pour l'usinage de pièces avec
- une broche d'outil (3) avec
-- un boîtier (24),
-- une unité d'entraînement (29) pour l'entraînement rotatif d'un outil d'usinage (4) et
-- une unité de serrage (34) pour le serrage et le détachement de l'outil d'usinage (4),
--- qui est agencée de manière rotative autour d'un axe de rotation (26) dans le boîtier (24),
--- qui peut être entraînée en rotation par rapport au boîtier (24) à l'aide de l'unité d'entraînement (29) autour de l'axe de rotation (26),
-- un premier canal d'amenée (54) pour l'amenée d'un fluide de refroidissement (5) vers l'outil d'usinage (4) et
-- un second canal d'amenée (60) pour l'amenée d'un fluide (18), en particulier d'un mélange de fluide et de lubrifiant (7), vers l'outil d'usinage (4),
- une première unité de mise à disposition (6) pour la mise à disposition du fluide de refroidissement (5),
- une seconde unité de mise à disposition (8) pour la mise à disposition du fluide (18), en particulier du mélange de fluide et de lubrifiant (7) et
- une unité de commande (9) pour la commande des unités de mise à disposition (6, 8),
**caractérisé en ce**
**que** l'unité de commande (9) est réalisée de telle manière que les types de fonctionnement suivants puissent être réglés au choix :
a) l'amenée du fluide de refroidissement (5) vers la broche d'outil (3) sans amenée simultanée du fluide (18), en particulier du mélange de fluide et de lubrifiant (7),
b) l'amenée du fluide (18), en particulier du mélange de fluide et de lubrifiant (7) vers la broche d'outil (3) sans amenée simultanée du fluide de refroidissement (5) et
c) l'amenée simultanée du fluide de refroidissement (5) et du fluide (18) en particulier du mélange de fluide et de lubrifiant (7).

2. Dispositif d'usinage selon la revendication 1, **caractérisé en ce**
**que** la première unité de mise à disposition (6) comporte un accumulateur de pression (10) pour le fluide de refroidissement (5) qui est isolé en particulier et/ou refroidissable.

3. Dispositif d'usinage selon la revendication 1 ou 2, **caractérisé en ce**
**que** la première unité de mise à disposition (6) comporte une première soupape (14) pour le réglage d'un débit du fluide de refroidissement (5).

4. Dispositif d'usinage selon l'une quelconque des revendications 1 à 3, **caractérisé en ce**
**que** la seconde unité de mise à disposition (8) comporte un appareil de mélange (16) pour le mélange d'un lubrifiant (17) avec un fluide (18), qui est réalisé en particulier sous la forme d'un appareil de mélange de quantité minimale.

5. Dispositif d'usinage selon l'une quelconque des revendications 1 à 4, **caractérisé en ce**
**que** la seconde unité de mise à disposition (8) comporte une seconde soupape (19) pour le réglage d'un débit du fluide (18), en particulier du mélange de fluide et de lubrifiant (7).

6. Dispositif d'usinage selon l'une quelconque des revendications 1 à 5, **caractérisé**
**par** au moins un capteur de mesure (15, 20, 100) pour le réglage d'un débit du fluide de refroidissement (5) et/ou du fluide (18), en particulier du mélange de fluide et de lubrifiant (7).

7. Dispositif d'usinage selon l'une quelconque des revendications 1 à 6, **caractérisé en ce**
**que** le premier canal d'amenée (54) est réalisé par une conduite tubulaire (54') qui est agencée concentriquement à l'axe de rotation (26) et est logée de manière rotative autour de celui-ci dans le boîtier (24).

8. Dispositif d'usinage selon l'une quelconque des revendications 1 à 7, **caractérisé en ce**
**que** le premier canal d'amenée (54) est réalisé par une conduite tubulaire (54') thermoisolante.

9. Dispositif d'usinage selon l'une quelconque des revendications 1 à 8, **caractérisé en ce**
**que** le second canal d'amenée (60) est réalisé au moins par sections en forme d'anneau et entoure le premier canal d'amenée (54).

10. Dispositif d'usinage selon l'une quelconque des revendications 1 à 9, **caractérisé en ce**
**qu'**une tige d'actionnement (39) couplée à l'unité de serrage (34) présente un perçage axial (55) avec un diamètre de perçage D_{B}, dans lequel est agencée une conduite tubulaire (54') avec un diamètre extérieur D_{A}, D_{A} étant < D_{B}, de sorte que la conduite tubulaire (54') forme le premier canal d'amenée (54) et un espace annulaire la conduite tubulaire (54') et la tige d'actionnement (39) forme au moins par sections le second canal d'amenée (60).

11. Dispositif d'usinage selon l'une quelconque des revendications 1 à 10, **caractérisé en ce**
**que** le premier canal d'amenée (54) présente une première ouverture d'amenée (56) éloignée de l'outil d'usinage (4) et une première ouverture d'évacuation (59) tournée vers l'outil d'usinage (4) qui sont agencées concentriquement à l'axe de rotation (26).

12. Dispositif d'usinage selon l'une quelconque des revendications 1 à 11, **caractérisé en ce**
**que** le second canal d'amenée (60) présente une seconde ouverture d'amenée (63) éloignée de l'outil d'usinage (4) qui est agencée dans un sens radial par rapport à l'axe de rotation (26).

13. Dispositif d'usinage selon la revendication 12, **caractérisé en ce**
**qu'**un élément de déviation (45) est agencé dans le second canal d'amenée (60), lequel élément est réalisé de telle manière que le fluide (18) amené radialement par la seconde ouverture d'amenée (63), en particulier le mélange de fluide et de lubrifiant (7), puisse être dévié dans le sens axial.

14. Dispositif d'usinage selon l'une quelconque des revendications 1 à 13, **caractérisé en ce**
**que** les canaux d'amenée (54, 60) débouchent dans un espace de mélange (98) qui est réalisé en particulier dans la zone de l'unité de serrage (34).

15. Procédé d'usinage de pièces comprenant les étapes suivantes :
- la mise à disposition d'un dispositif d'usinage (1) avec
-- une broche d'outil (3) avec un boîtier (24) ; une unité d'entraînement (29) pour l'entraînement rotatif d'un outil d'usinage (4), et une unité de serrage (34) pour le serrage et le détachement de l'outil d'usinage (4) qui est agencée de manière rotative autour d'un axe de rotation (26) dans le boîtier (24) et qui peut être entraînée en rotation par rapport au boîtier (24) à l'aide de l'unité d'entraînement (29) autour de l'axe de rotation (26), un premier canal d'amenée (54) pour l'amenée d'un fluide de refroidissement (5) vers l'outil d'usinage (4) et un second canal d'amenée (60) pour l'amenée d'un fluide (18), en particulier d'un mélange de fluide et de lubrifiant (7), vers l'outil d'usinage (4),
-- une première unité de mise à disposition (6) pour la mise à disposition du fluide de refroidissement (5),
-- une seconde unité de mise à disposition (8) pour la mise à disposition du fluide (18), en particulier du mélange de fluide et de lubrifiant (7) et
-- une unité de commande (9) pour la commande des unités de mise à disposition (6, 8),
-- ainsi qu'avec un outil d'usinage (4) serré dans la broche d'outil (3),
- l'usinage d'une pièce (2) avec l'outil d'usinage (4), le dispositif d'usinage (1) fonctionnant dans les types de fonctionnement suivants :
a) l'amenée du fluide de refroidissement (5) vers la broche d'outil (3) sans amenée simultanée du fluide (18), en particulier du mélange de fluide et de lubrifiant (7),
b) l'amenée du fluide (18), en particulier du mélange de fluide et de lubrifiant (7) vers la broche d'outil (3) sans amenée simultanée du fluide de refroidissement (5) et
c) l'amenée simultanée du fluide de refroidissement (5) et du fluide (18) en particulier du mélange de fluide et de lubrifiant (7),
par l'outil d'usinage (4) vers au moins une coupe (72) de l'outil d'usinage (4) pendant l'usinage de la pièce (2).

16. Procédé selon la revendication 15, **caractérisé en ce**
**que** le fluide de refroidissement (5) et le fluide (18) en particulier le mélange de fluide et de lubrifiant (7) sont mélangés avant l'au moins une coupe (72) en particulier dans l'outil d'usinage (4) ou dans la broche d'outil (3).

17. Procédé selon la revendication 15 ou 16, **caractérisé en ce**
**que** le fluide de refroidissement (5) présente lors de l'amenée dans la broche d'outil (3) une température T_{K} de 10 °C maximum, en particulier de 0 °C maximum, en particulier de -10 °C maximum et en particulier de-50 °C maximum.

18. Procédé selon l'une quelconque des revendications 15 à 17, **caractérisé en ce**
**que** le fluide de refroidissement (5) présente lors de l'amenée dans la broche d'outil (3) une température T_{K} qui est inférieure à une température T_{G} du fluide (18), en particulier du mélange de fluide et de lubrifiant (7) lors de l'amenée dans la broche d'outil (3).

19. Procédé selon l'une quelconque des revendications 15 à 18, **caractérisé en ce**
**que** l'amenée du mélange de fluide et de lubrifiant (7) est effectuée dans la broche d'outil (3) comme lubrifiant de quantité minimale.
